(19) Europäisches Patentamt
European Patent Office
Office européen des brevets

(11) EP 1 213 337 B1

(12) **EUROPEAN PATENT SPECIFICATION**

(45) Date of publication and mention of the grant of the patent:
**02.11.2005 Bulletin 2005/44**

(51) Int Cl.$^7$: **C09K 19/18**, C09K 19/42

(21) Application number: **01126469.4**

(22) Date of filing: **09.11.2001**

(54) **Liquid crystalline medium and liquid crystal display**

Flüssigkristallines Medium und Flüssigkristallanzeige

Milieu liquide cristallin et dispositif à cristaux liquides

(84) Designated Contracting States:
**AT BE CH CY DE DK ES FI FR GB GR IE IT LI LU MC NL PT SE TR**

(30) Priority: **06.12.2000 EP 00126754**

(43) Date of publication of application:
**12.06.2002 Bulletin 2002/24**

(73) Proprietor: **Merck Patent GmbH**
**64293 Darmstadt (DE)**

(72) Inventors:
- **Goetz, Achim**
  **64665 Alsbach-Hähnlein (DE)**
- **Schuler, Brigitte**
  **63762 Grossostheim (DE)**
- **Manabe, Atsutaka**
  **91341 Röttenbach (DE)**
- **Kirsch, Peer, Dr.**
  **64293 Darmstadt (DE)**

(56) References cited:
**DE-A- 19 748 109** **DE-A- 19 933 175**

- **KIRSCH, PEER ET AL: "Liquid crystals based on hypervalent sulfur fluorides: pentafluorosulfuranyl as polar terminal group" ANGEW. CHEM., INT. ED. (1999), 38(13/14), 1989-1992 , 1999, XP001065436**
- **MOLECULAR CRYSTALS AND LIQUID CRYSTALS , vol. 346, 2000, pages 193-199, XP008001419 READING GB**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 1 213 337 B1

## Description

The present invention relates to liquid crystalline media and to liquid crystal displays comprising these media, in particular to displays of the optically compensated bend mode and to displays of the composite systems type like PDLCs and most particular amongst these to holographic PDLCs.

Problem to be solved and state of the art

Liquid Crystal Displays (LCDs) are widely used to display information. Electro-optical modes employed are e.g. the twisted nematic (TN)-, the super twisted nematic (STN)- and the electrically controlled birefringence (ECB)-mode with their various modifications, as well as others. Besides these modes, which all do use an electrical field, which is substantially perpendicular to the substrates, respectively to the liquid crystal layer, there are also electro-optical modes employing an electrical field substantially parallel to the substrates, respectively the liquid crystal layer like e.g. the in-plane switching (IPS)-mode (as disclosed e.g. in DE 40 00 451 and EP 0 588 568).

A promising electrooptical mode for LCDs is the optically compensated bend (OCB) mode. This mode has a favourable small viewing angle dependence of the contrast. Further the response times in this mode are small.

Besides the various different modes using the liquid crystal medium as such, oriented on surfaces, which typically are pre-treated to achieve uniform alignment of the liquid crystal material, there are applications using composite systems of liquid crystal materials of low molecular weight together with polymeric materials such as e.g. polymer dispersed liquid crystal (PDLC)-, nematic curvilinearily aligned phase (NCAP)- and polymer network (PN)-systems, as disclosed for example in WO 91/05 029. These composite systems typically use an electrical field substantially perpendicular to the composite layer.

LCDs are used for direct view displays, as well as for projection type displays. Besides these applications LCDs, especially LCDs comprising composite systems like PDLCs and in particular so called holographic PDLC (HPDLC) systems are used in practical applications. HPDLCs are described e.g. in Date, Takeuchi, Tanaka, and Kato, Journal of the SID 7/1 (1999), p. 17 to 22, which is incorporated by reference. These HPDLC displays are generating three bright colors, preferably primary colors, utilizing Bragg reflection. This technique results in excellent bright colors as it does neither need polarizers, nor color filters. A single layer of the periodic structure of polymer and liquid crystal controls the reflection of one particular color. To realize three primary colors consequently three layers, one for each color are required. Each of the three layers has to be addressed independently. This requires three sets of HPDLC films, each with corresponding electrodes. This large number of layers and corresponding electrodes, which is difficult to realize with a good yield in mass production, can beneficiously be reduced when the "two-frequency" drive method is applied.

For composite systems a high $\Delta n$ of the liquid crystal used is required in order to achieve an efficiently scattering state and to realize a good contrast. Though there have been proposed PDLC-systems with liquid crystal mixtures with low $\Delta n$ to improve the so called off axis haze, the predominant problem in most cases is to achieve sufficient contrast in the first place. This is especially the case for PDLC-systems, which are disclosed e.g. in Date, Takeuchi, Tanaka, and Kanto, Journal of the SID 7/1 (1999), p. 17-22. The liquid crystals available typically are characterized by $\Delta n$ values of up to 0.280 or even up to 0.290. This upper limit, however, is still insufficiently low for many applications. Further it has so far only been achieved accepting various compromises with respect to the other properties of the liquid crystal mixtures used. The most typical undesired trade-offs are an insufficiently high clearing point, an unfavourably narrow nematic phase range, a rather high temperature for the lower end of the stability of the nematic phase, too low dielectric anisotropy and hence too high operating voltages, unfavourable elastic constants and last not least too high viscosity values or combinations thereof.

Good compatibility with the precursors of the polymers of the composite systems and easy phase separation during the formation of the composite systems are obvious prerequisites for liquid crystals for such applications.

Liquid crystal compounds with a terminal phenyl ring bearing a terminal SF5 group are known e. g. from DE 37 21 268. Tolane compounds with this terminal group are mentioned e. g. in DE 197 48 108, DE 197 48 109 and DE 199 33 175.

Kirsch, Peer et al., Angew. Chem., Int. Ed. (1999), 30 (13/14), pp. 1989-1992, 1999; Kirsch, Peer et al., Mol. Cryst. Liq. Cryst., Vol 346 (2000) pp. 193-199, 2000; DE 197 48 109 A and DE 199 33 175 A are describing compounds with a terminal $SF_5$-group. The latter three references do also mention liquid crystalline mixtures comprising these respective compounds.

Liquid crystal mixtures consisting predominantly or even entirely of terminally cyano substituted biphenyls and terphenyls are as a rule characterized by suitable high $\Delta\varepsilon$ values, but have limited values of $\Delta n$ and already are likely to show insufficient stability at low temperatures, i.e. in most cases either formation of a smectic phase and or crystallisation. Liquid crystal mixtures using large quantities of halogenated tolane compounds with three phenyl rings, which are almost dielectrically neutrals, as disclosed, e.g. in the European Patent Application No. EP 99111782.1 are

characterized by comparatively low Δεvalues which are not suitable for most applications and often even show severe problems with respect to the stability of the nematic phase at low temperatures.

Thus, there is a significant need for liquid crystal media with suitable properties for practical applications such as a wide nematic phase range, low viscosities, appropriate optical anisotropy Δn according to the display mode used especially a suitably high Δn for OCB displays and for composite systems like PDLCs and in particular with suitably large good compatibility with polymer precursors for composite systems.

<u>Present invention</u>

Surprisingly, it now has been found that liquid crystal media with high Δn especially useful for OCB displays and for composite systems can be realized which do not exhibit these drawbacks of the materials of the prior art or at least do exhibit them to a significantly lesser degree.

These improved liquid crystal media according to the instant application are comprising a component A composting one or more strongly dielectrically positive compounds with very high values of Δn of formula I

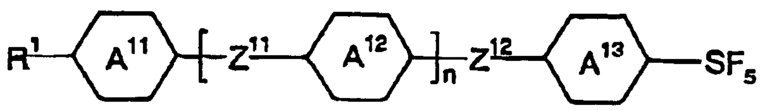

I

wherein

$R^1$ is n-alkyl, n-alkoxy with 1 to 7 C-atoms, alkenyl, alkenyloxy or alkoxyalkyl with 2 to 7 C-atoms,

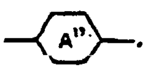

each, independently of each other, are

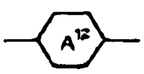 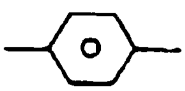, 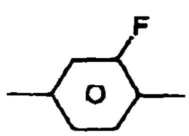, 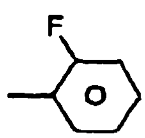, 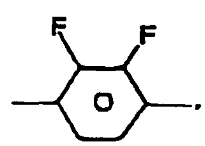.

and

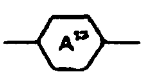 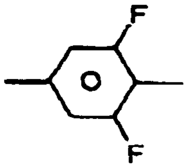 or 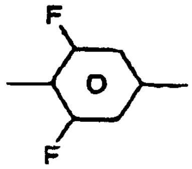

and

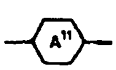

alternatively may also be

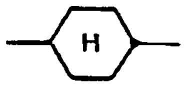

one of

$Z^{11}$ and $Z^{12}$ is -C≡C- and the other one, if present, is -C≡C-, $-CF_2O-$, trans- -CH=CH-, trans- -CF=CF- or a single bond, and

n is 0 or 1

and a component B comprising one or more compounds selected from the group of formulae II-1 to II-3

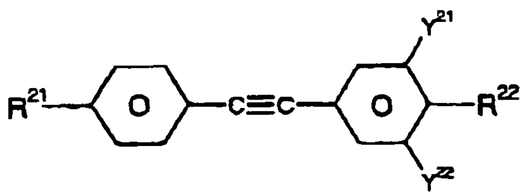

II-1

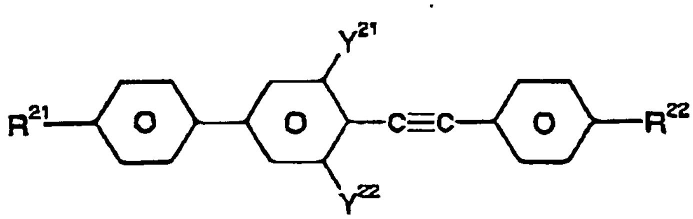

II-2

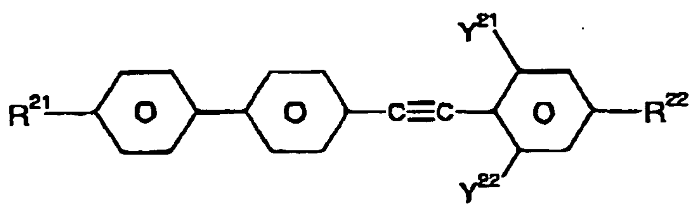

II-3

wherein

$R^{21}$ and $R^{22}$ independently of each other, have the meaning given for $R^1$,

$Y^{21}$ and $Y^{22}$ are, independently of each other, H or F,

and in that its Δn is 0.25 or more.

Optionally the liquid crystal media are comprising a component C which is comprising dielectrically positive compounds of formula III

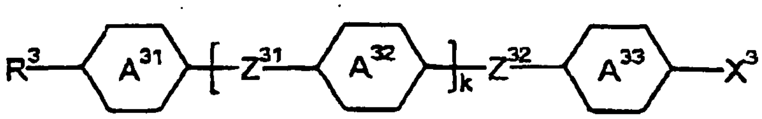

III

wherein

$R^3$ has the meaning given for $R^1$ under formula I above,

at least one of

$Z^{31}$ and $Z^{32}$ is -C≡C-, the other, if present, is $-CH_2CH_2-$, -COO-, -C≡C-, trans- CH=CH-, trans- -CF=CF-, $-CH_2O-$, $-CF_2O-$ or a single bond, preferably a single bond,

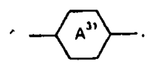
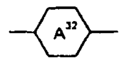

each have the meaning given for and

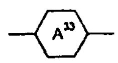

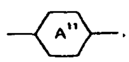
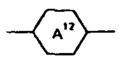
and
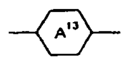

respectively, above under formula I,

$X^3$ is CN, F, Cl or NCS, preferably CN or NCS, most preferably NCS and

k is 0 or 1,

Preferably the liquid crystalline media according to the instant invention contain a component A comprising, preferably predominantly consisting of and most preferably entirely consisting of compounds of formula I.

Comprising in this application means in the context of compositions that the entity referred to, e.g. the medium or the component, contains the compound or compounds in question, preferably in a total concentration of 10 % or more and most preferably of 20 % or more.

Predominantly consisting, in this context, means that the entity referred to contains 80 % or more, preferably 90 % or more and most preferably 95 % or more of the compound or compounds in question.

Entirely consisting, in this context, means that the entity referred to contains 98 % or more, preferably 99 % or more and most preferably 100.0 % of the compound or compounds in question.

The compounds of formula I are preferably selected from the group of sub-formulae I-1 to I-5

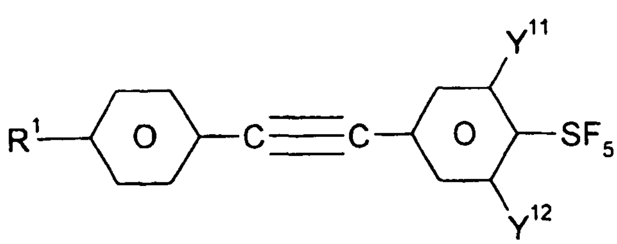

I-1

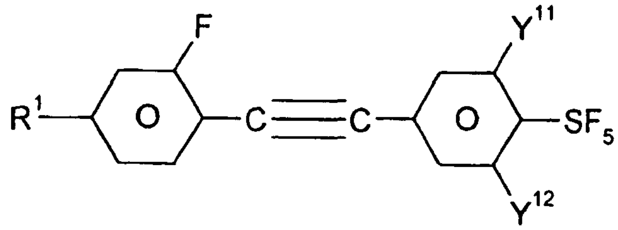

I-2

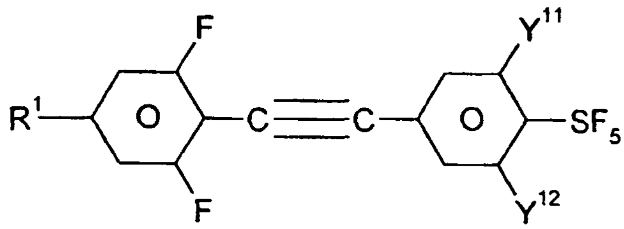

I-3

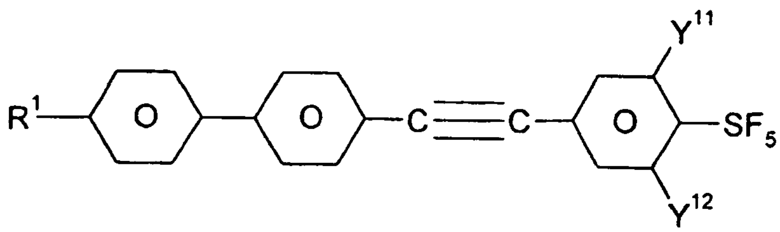

I-4

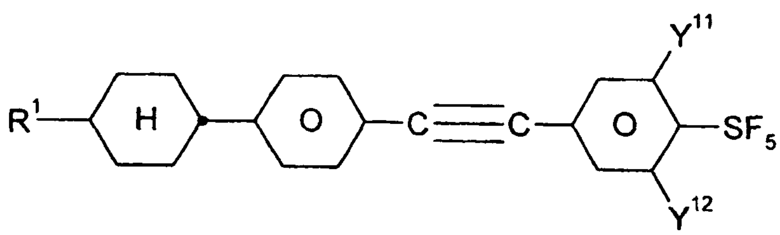

I-5

wherein

$R^1$ has the meaning given under formula I above

$Y^{11}$ and $Y^{12}$ are independently of each other H or F.

In a preferred embodiment the liquid crystalline media according to the instant invention contains a component B comprising, preferably predominantly consisting of and most preferably entirely consisting of compounds of formula II. The compounds of formula II are preferably selected from the group of sub-formulae II-1 to II-3

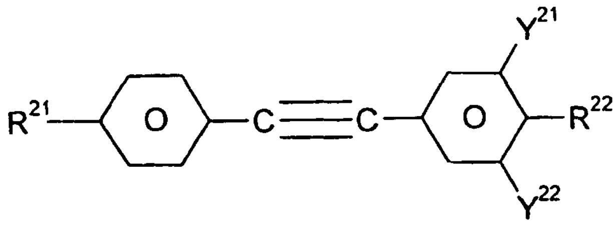

II-1

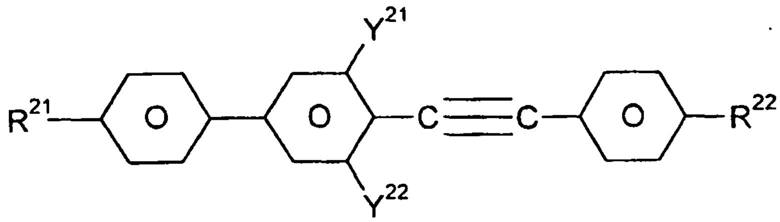

II-2

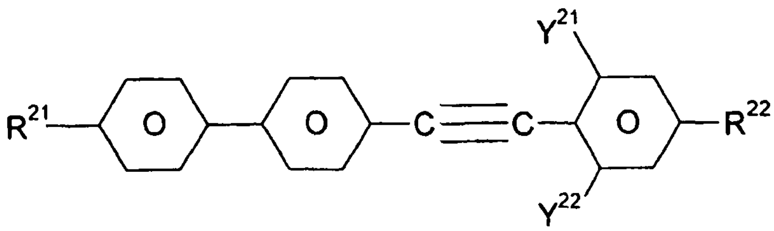

II-3

wherein

$R^{21}$ and $R^{22}$ have the meaning given under formula II above and

$Y^{21}$ and $Y^{22}$ are independently of each other H or F.

In a further preferred embodiment the liquid crystal medium contains a liquid crystal component C which is preferably predominantly consisting of and most preferably entirely consisting of compounds of formula III

The compounds of formula III are preferably selected from the group of sub-formulae III-1 to III-3.

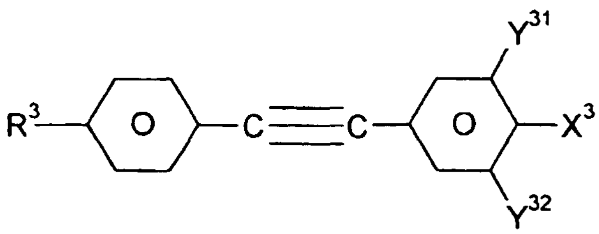

III-1

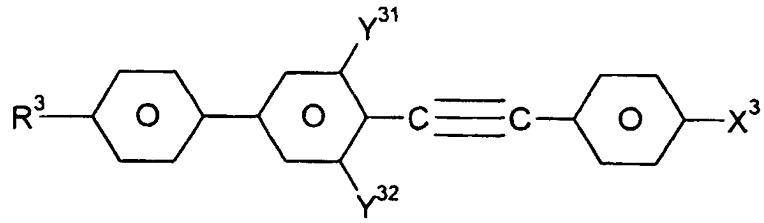

III-2

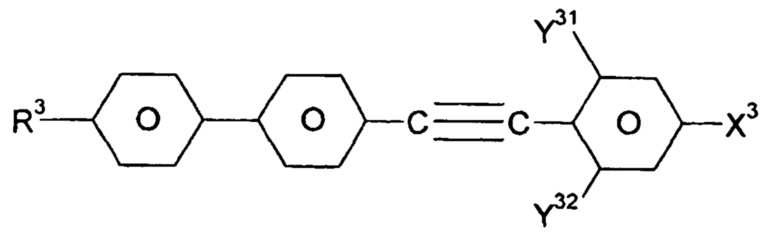

III-3

wherein

$R^3$ has the meaning given under formula III above

$Y^{31}$ and $Y^{32}$ are independently of each other H or F and

$X^3$ has the meaning given under formula III above and is preferably CN or NCS and most preferably NCS.

This component C may be, and preferably is, present besides component B.

Most preferably the medium contains compounds of formula I selected from the group of sub-formulae I-1 to 1-3. Most prefered of these are compounds of sub-formulae I-1a, I-1b, I-2a, I-2b, I-3a and I-3b

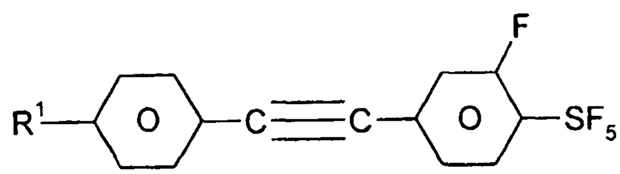

I-1a

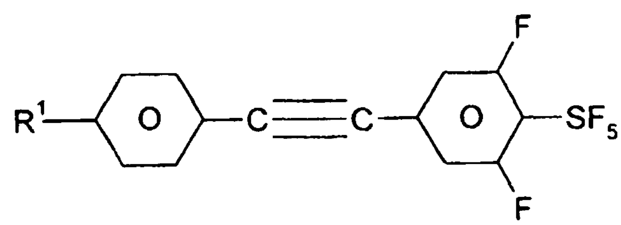

I-1b

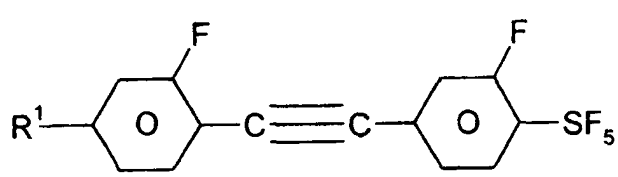

I-2a

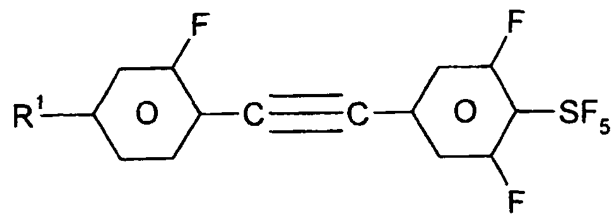

I-2b

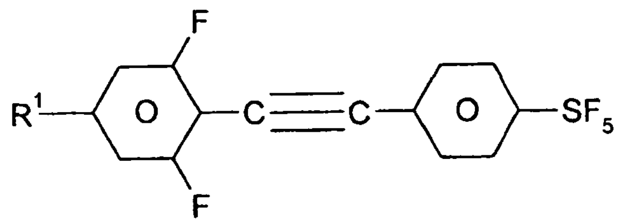

I-3a

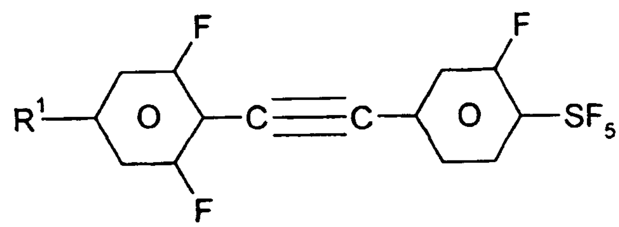

I-3b

wherein

$R^1$ has the meaning given under formula I above and preferably is n- alkyl with 1 to 5 C-atoms or n-alkoxy with 1 to 4 C-atoms, or 1-E- alkenyl with 2 to 5 C-atoms.

Most prefered the media contain compounds selected from the group of formulae I-1a, I-1b and I-2a.

Another type of compounds which optionally and beneficiously can be used in the media according to the instant invention are compounds of formula IV

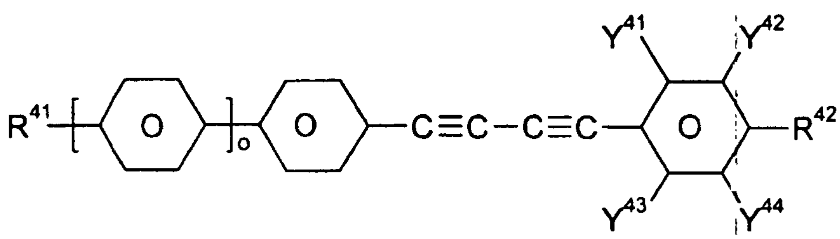

IV

wherein

$R^{41}$ and $R^{42}$ independently of each other, have the meaning given for $R^1$ above under formula I and alternatively may be an H atom,

$Y^{41}$, $Y^{42}$, $Y^{43}$ and $Y^{44}$ are, independently of each other H or F and

o is 0 or 1.

Other compounds which optionally and beneficiously can be used in the media according to the instant invention are compounds of formulae V, VI, VII and VIII

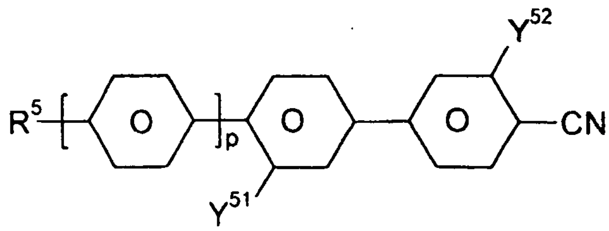

V

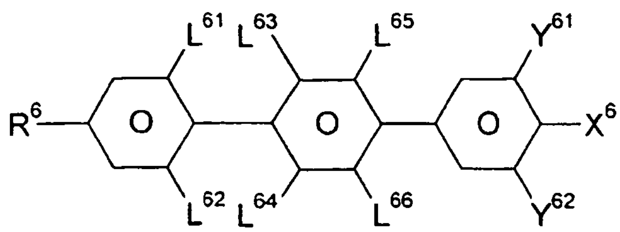

VI

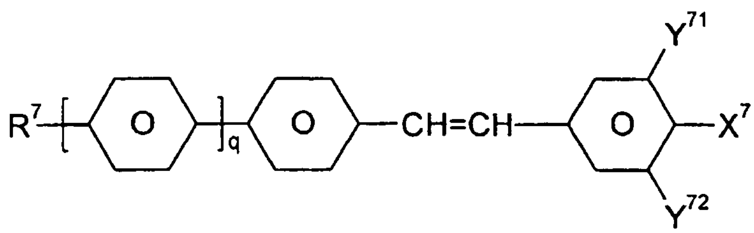

VII

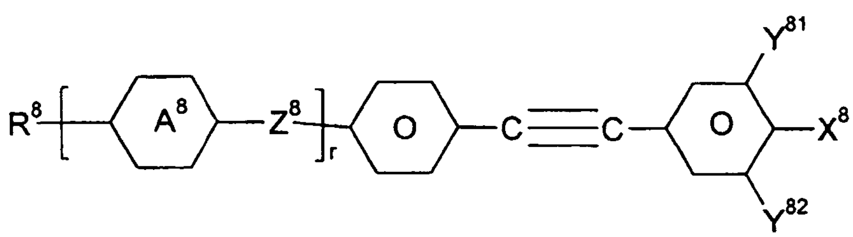

VIII

wherein

$R^5$, $R^6$, $R^7$ and $R^8$ all, independently of each other, have the meaning given for $R^1$ above under formula I and

$Y^{51}$ and $Y^{52}$ are, independently of each other, H or F,

p is 0 or 1,

$Y^{61}$ and $Y^{62}$ are, independently of each other, H or F,

$L^{61}$ to $L^{66}$ are, independently of each other H or F, preferably up to two of them are H, preferably one or two of $L^{61}$ to $L^{66}$ are F, preferably $L^{61}$ is F, the others are H, or $L^{61}$ and $L^{63}$ are F or $L^{62}$ and $L^{64}$ are F, all others are H,

$X^6$ is Cl or NCS, preferably NCS,

$Y^{71}$ and $Y^{72}$ are, independently of each other, H or F,

$X^7$ is CN or NCS,

q is 0 or 1,

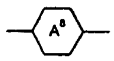

is

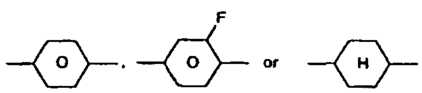

$Z^8$ is trans- -CH=CH-, trans- -CF=CF-, $-CH_2CH_2-$, $-CF_2CF_2-$, $-CF_2O-$, -COO- or a single bond, preferably a single bond,

$Y^{81}$ and $Y^{82}$ are, independently of each other, H or F,

$X^8$ is F, Cl, $-OCF_3$ or $-OCF_2H$, preferably F or $-OCF_3$,

r is 0 or 1, preferably 0.

Preferably the compounds of formula V are chosen from the group of compounds of sub-formulae V-1 to V-3.

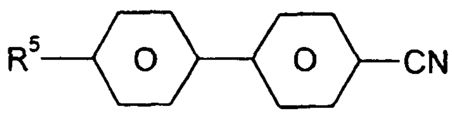

V-1

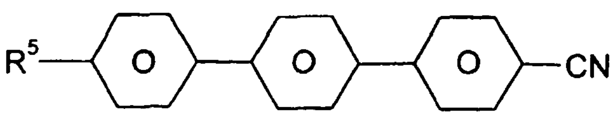

V-2

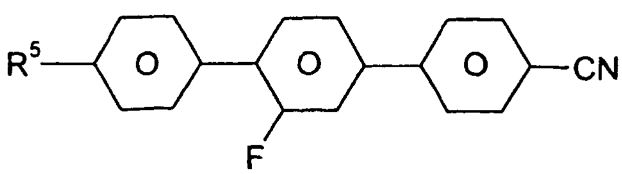

V-3

wherein

$R^5$ has the meaning given above under formula V and for sub-formula V-1 preferably is alkyl or alkoxy and for sub-formulae V-2 and V-3 preferably alkyl.

Preferably the compounds of formula VI are chosen from the group of compounds of sub-formulae VI-1 to VI-4

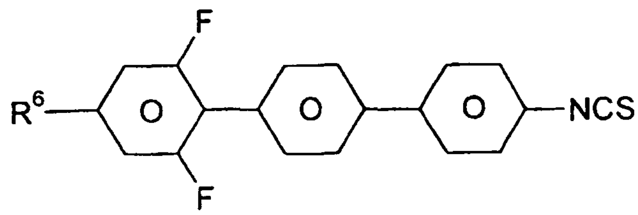

VI-1

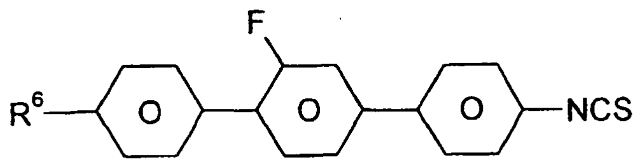

VI-2

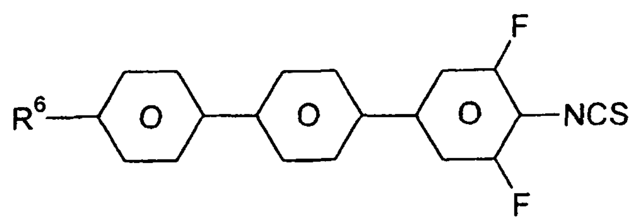

VI-3

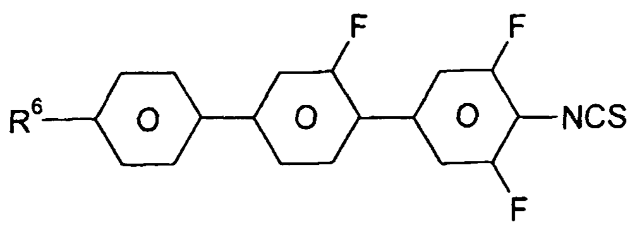

VI-4

wherein

$R^6$ has the meaning given above under formula VI and preferably is n-alkyl or 1-E-alkenyl, most preferably alkyl.

Preferably the compounds of formula VII are chosen from the group of compounds of sub-formulae VII-1 to VII-4

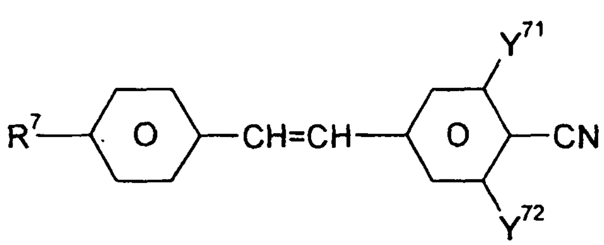

VII-1

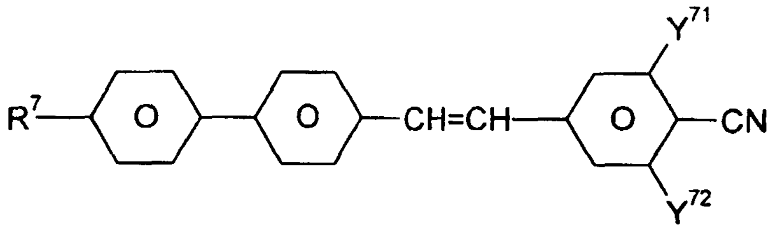

VII-2

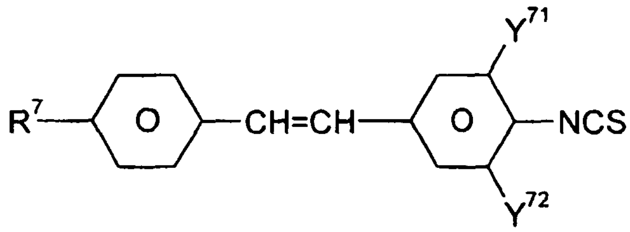

VII-3

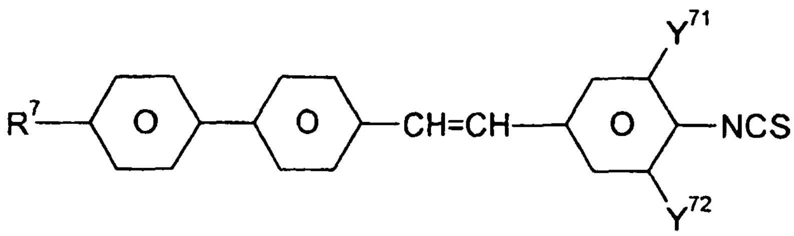

VII-4

wherein

$R^7$ $Y^{71}$ and $Y^{72}$ have the respective meanings given above under formula VII and preferably $R^7$ is alkyl, alkoxy or alkenyl.

In formula VII-3 $R^7$ is preferably alkyl or alkoxy and $Y^{71}$ is preferably F. In formula VII-4 $R^7$ is preferably alkyl or alkenyl and $Y^{71}$ is preferably F.

Preferably the compounds of formula VIII are chosen from the group of compounds of sub-formulae VIII-1 to VIII-6

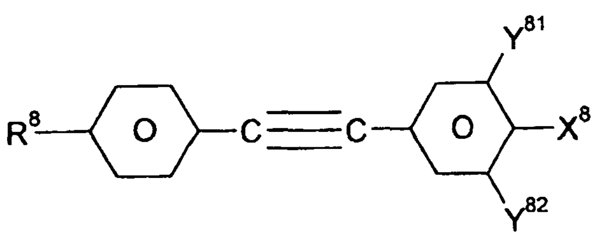

VIII-1

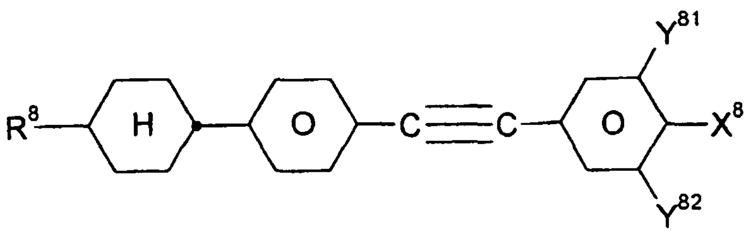

VIII-2

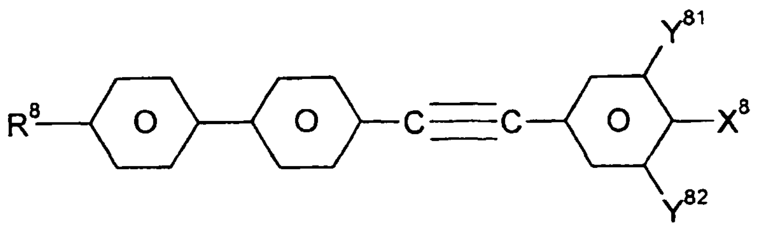

VIII-3

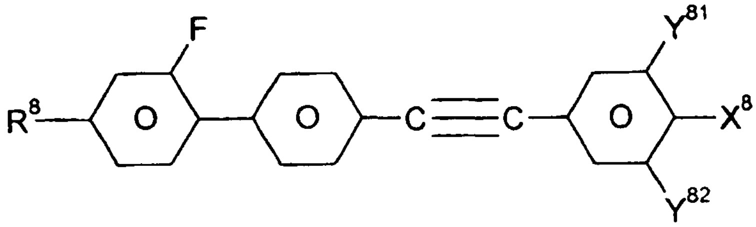

VIII-4

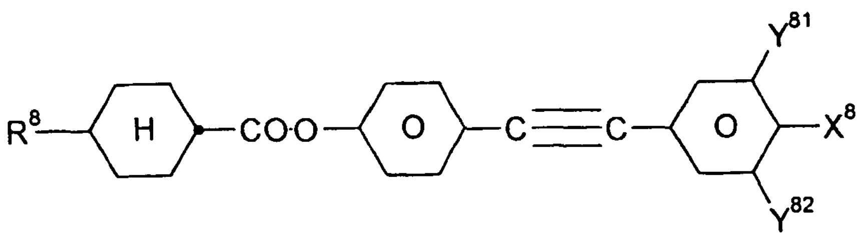

VIII-5

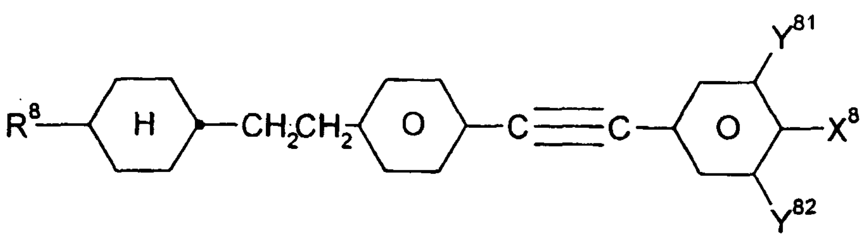

VIII-6

wherein

$R^8$, $Y^{81}$, $Y^{82}$ and $X^8$ have the respective meanings given above under formula VIII and in case $X^8$ is F, preferably $Y^{81}$ is F.

In formula VIII-1 $X^8$ preferably is F or $OCF_3$ and $R^8$ preferably is alkyl, alkoxy or alkenyoxy. In case $X^8$ is F preferably $Y^{81}$ is F and most preferably both $Y^{81}$ and $Y^{82}$ are F.

In formula VIII-2 $X^8$ preferably is F or $OCF_3$, $R^8$ preferably is alkyl or alkenyl and $Y^{81}$ most preferably is F.

Component A is used in a concentration from 1 to 70 %, preferably from 4 to 50 % and most preferably from 9 to 40 % of the total mixture.

Component B is used in a concentration from 0 to 90 %, preferably from 10 to 80 % and most preferably from 20 to 75 % of the total mixture.

Component C is used in a concentration from 0 to 50 %, preferably from 10 to 40 % and most preferably from 12 to 35 % of the total mixture.

Further the medium contains compounds of

formula IV in a concentration from 0 to 40 %, preferably from 5 to 25 % and/or

formula V in a concentration from Oto 30 %, preferably from 4 to 20 % and/or

formula VI in a concentration from 0 to 25 %, preferably from 5 to 25 % and/or

formula VII in a concentration from 0 to 30 %, preferably from 5 to 30 % and/or

formula VIII in a concentration from 0 to 30 %, preferably from 5 to 30 %.

These further compounds are used to adjust especially the phase range and the optical anisotropy of the inventive liquid crystal media.

The total concentration of these further compounds of formulae IV to VIII in the liquid crystal medium according to the present invention is preferably 0 % to 50 %, more preferably 0 % to 30 %, most preferably 0 % to 20 % and in particular 4 % to 16 %.

Optionally, the inventive media can comprise further liquid crystal compounds in order to adjust the physical properties. Such compounds are known to the expert. Their concentration in the media according to the instant invention is preferably 0 % to 30 %, more preferably 0 % to 20 % and most preferably 5 % to 15 %.

Preferably the liquid crystal medium contains 50 % to 100 %, more preferably 70 % to 100 % and most preferably 80 % to 100 % and in particular 90 % to 100 % totally of components A, B and C, which contain, preferably predominantly consist of and most preferalby entirely consist of one or more of compounds of formulae I, II and III, respectively.

The liquid crystal media according to the instant invention are characterized by a clearing point above 80 °C, preferably of 90 °C or more, especially preferred of 100 °C or more and in particular of 110 °C.

The $\Delta n$ of the liquid crystal media according to the instant invention is 0.25 or more, preferably in the range of 0.30 to 0.60, more preferably in the range of 0.32 to 0.50, most preferably in the range of 0.33 to 0.45 and in particular in the range of 0.35 to 0.40.

The $\Delta\varepsilon$, at 1 kHz and 20 °C, of the liquid crystal medium according to the invention is 6 or more, preferably 10 or more, most preferably 15 or more and in particular 19 or more.

The liquid crystal media of the state of the art have been limited by low $\Delta\varepsilon$ values at high $\Delta n$ values and vice versa. In contrast, the inventive media have pairs of ($\Delta n$, $\Delta\varepsilon$), which are above a line passing through the points (0.290, 18.0) and (0.370, 4.0) in a plot of $\Delta\varepsilon$ as a function of $\Delta n$ of the same medium. Preferably they are above a line through (0.290, 20.0) and (0.370, 6.0), most preferably above a line through (0.310, 20.0) and (0.370, 8.0) and in particular above a line through (0.350, 18.0) and (0.390, 8.0).

Preferably the nematic phase of the inventive media extends at least from 0 °C to 70 °C, most preferably at least -20 °C to 70 °C and most preferably at least from -30 °C to 80 °C, wherein at least means that preferably the lower limit is under cut, wherein the upper limit is surpassed.

In the present application the term dielectrically positive compounds describes compounds with $\Delta\varepsilon > 1{,}5$, dielectrically neutral compounds are compounds with $-1{,}5 \leq \Delta\varepsilon \leq 1{,}5$ and dielectrically negative compounds are compounds with $\Delta\varepsilon < -1{,}5$. The same holds for components. $\Delta\varepsilon$ is determined at 1 kHz and 20 °C. The dielectrical anisotropies of the compounds is determined from the results of a solution of 10 % of the individual compounds in a nematic host mixture. The capacities of these test mixtures are determined both in a cell with homeotropic and with homogeneous alignment. The cell gap of both types of cells is approximately 10 μm. The voltage applied is a rectangular wave with a frequency of 1 kHz and a root mean square value typically of 0.5 V to 1.0 V, however, it is always selected to be below the capacitive threshold of the respective test mixture.

For dielectrically positive compounds the mixture ZLI-4792 and for dielectrically neutral, as well as for dielectrically negative compounds, the mixture ZLI-3086, both of Merck KGaA, Germany are used as host mixture, respectively. The dielectric permittivities of the compounds are determined from the change of the respective values of the host mixture upon addition of the compounds of interest and are extrapolated to a concentration of the compounds of interest of 100 %.

Components having a nematic phase at the measurement temperature of 20 °C are measured as such, all others are treated like compounds.

The term threshold voltage refers in the instant application to the optical threshold and is given for 10 % relative contrast ($V_{10}$) and the term saturation voltage refers to the optical saturation and is given for 90 % relative contrast ($V_{90}$) both, if not explicitly stated otherwise. The capacitive threshold voltage ($V_0$, also called Freedericksz-threshold $V_{Fr}$) is only used if explicitly mentioned.

The ranges of parameters given in this application are all including the limiting values, unless explicitly stated otherwise.

Throughout this application, unless explicitly stated otherwise, all concentrations are given in mass percent and relate to the respective complete mixture, all temperatures are given in degrees centigrade (Celsius) and all differences of temperatures in degrees centigrade. All physical properties have been and are determined according to "Merck Liquid Crystals, Physical Properties of Liquid Crystals", Status Nov. 1997, Merck KGaA, Germany and are given for a temperature of 20 °C, unless explicitly stated otherwise. The optical anisotropy (Δn) is determined at a wavelength of 589.3 nm. The dielectric anisotropy (Δε) is determined at a frequency of 1 kHz. The threshold voltages, as well as all other electro-optical properties have been determined with test cells prepared at Merck KGaA, Germany. The test cells for the determination of Δε had a cell gap of 22 µm. The electrode was a circular ITO electrode with an area of 1.13 $cm^2$ and a guard ring. The orientation layers were lecithin for homeotropic orientation ($\varepsilon_{\parallel}$) and polyimide AL-1 054 from Japan Synthetic Rubber for homogeneuous orientation ($\varepsilon_{\perp}$). The capacities were determined with a frequency response analyser Solatron 1260 using a sine wave with a voltage of 0.3 $V_{rms}$. The light used in the electro-optical measurements was white light. The set up used was a commercially available equipment of Otsuka, Japan. The characteristic voltages have been determined under perpendicular observation. The threshold ($V_{10}$) - mid grey ($V_{50}$) - and saturation ($V_{90}$) voltages have been determined for 10 %, 50 % and 90 % relative contrast, respectively.

The liquid crystal media according to the present invention can contain further additives and chiral dopants in usual concentrations. The total concentration of these further constituents is in the range of 0 % to 10 %, preferably 0.1 % to 6 %, based on the total mixture. The concentrations of the individual compounds used each are preferably in the range of 0.1 to 3 %. The concentration of these and of similar additives is not taken into consideration for the values and ranges of the concentrations of the liquid crystal components and compounds of the liquid crystal media in this application.

The inventive liquid crystal media according to the present invention consist of several compounds, preferably of 3 to 30, more preferably of 5 to 20 and most preferably of 6 to 14 compounds. These compounds are mixed in conventional way. As a rule, the required amount of the compound used in the smaller amount is dissolved in the compound used in the greater amount. In case the temperature is above the clearing point of the compound used in the higher concentration, it is particularly easy to observe completion of the process of dissolution. It is, however, also possible to prepare the media by other conventional ways, e. g. using so called pre-mixtures, which can be e. g. homologous or eutectic mixtures of compounds or using so called multi-bottle-systems, the constituents of which are ready to use mixtures themselves.

By addition of suitable additives, the liquid crystal media according to the instant invention can be modified in such a way, that they are usable in all known types of liquid crystal displays, either using the liquid crystal media as such, like TN-, TN-AMD, ECB-, VAN-AMD IPS and OCB LCDs and in particular in composite systems, like PDLC-, NCAP- and PN-LCDs and especially in HPDLCs.

The melting point T(C,N), the transition from the smectic (S) to the nematic (N) phase T(S,N) and the clearing point T (N,I) of the liquid crystals are given in degrees centigrade.

In the present application and especially in the following examples, the structures of the liquid crystal compounds are represented by abbreviations also called acronyms. The transformation of the abbreviations into the corresponding structures is straight forward according to the following two tables A and B. All groups $C_nH_{2n+1}$ and $C_mH_{2m+1}$ are straight chain alkyl groups with n respectively m C-atoms. The interpretation of table B is self evident. Table A does only list the abbreviations for the cores of the structures. The individual compounds are denoted by the abbreviation of the core followed by a hyphen and a code specifying the substituents $R^1$, $R^2$, $L^1$ and $L^2$ follows:

| Code for $R^1$, $R^2$, $L^1$, $L^2$ | $R^1$ | $R^2$ | $L^1$ | $L^2$ |
|---|---|---|---|---|
| nm | $C_nH_{2n+1}$ | $C_mH_{2m+1}$ | H | H |
| nOm | $C_nH_{2n+1}$ | $OC_mH_{2m+1}$ | H | H |
| nO.m | $OC_nH_{2n+1}$ | $C_mH_{2m+1}$ | H | H |
| n | $C_nH_{2n+1}$ | CN | H | H |
| nN.F | $C_nH_{2n+1}$ | CN | H | F |
| nN.F.F | $C_nH_{2n+1}$ | CN | F | F |
| nF | $C_nH_{2n+1}$ | F | H | H |
| nF.F | $C_nH_{2n+1}$ | F | H | F |
| nF.F.F | $C_nH_{2n+1}$ | F | F | F |
| nOF | $OC_nH_{2n+1}$ | F | H | H |
| nCl | $C_nH_{2n+1}$ | Cl | H | H |
| nCl.F | $C_nH_{2n+1}$ | Cl | H | F |
| nCl.F.F | $C_nH_{2n+1}$ | Cl | F | F |
| $nCF_3$ | $C_nH_{2n+1}$ | $CF_3$ | H | H |
| $nCF_3.F$ | $C_nH_{2n+1}$ | $CF_3$ | H | F |

(continued)

| Code for $R^1$, $R^2$, $L^1$, $L^2$ | $R^1$ | $R^2$ | $L^1$ | $L^2$ |
|---|---|---|---|---|
| $nCF_3$.F.F | $C_nH_{2n+1}$ | $CF_3$ | F | F |
| $nOCF_3$ | $C_nH_{2n+1}$ | $OCF_3$ | H | H |
| $nOCF_3$.F | $C_nH_{2n+1}$ | $OCF_3$ | H | F |
| $nOCF_3$.F.F | $C_nH_{2n+1}$ | $OCF_3$ | F | F |
| $nOCF_2$ | $C_nH_{2n+1}$ | $OCHF_2$ | H | H |
| $nOCF_2$.F | $C_nH_{2n+1}$ | $OCHF_2$ | H | F |
| $nOCF_2$.F.F | $C_nH_{2n+1}$ | $OCHF_2$ | F | F |
| nS | $C_nH_{2n+1}$ | NCS | H | H |
| nS.F | $C_nH_{2n+1}$ | NCS | H | F |
| nS.F.F | $C_nH_{2n+1}$ | NCS | F | F |
| rVsN | $C_rH_{2r+1}$-CH=CH-$C_sH_{2s}$- | CN | H | H |
| rEsN | $C_rH_{2r+1}$-O-$C_sH_{2s}$- | CN | H | H |
| nAm | $C_nH_{2n+1}$ | $COOC_mH_{2m+1}$ | H | H |

**Table A:**

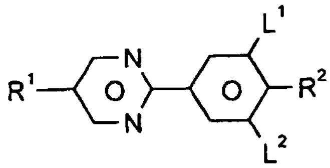

PYP

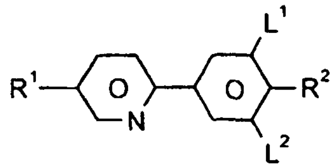

PYRP

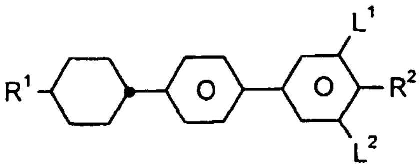

BCH

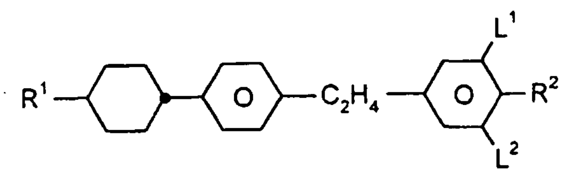

EBCH

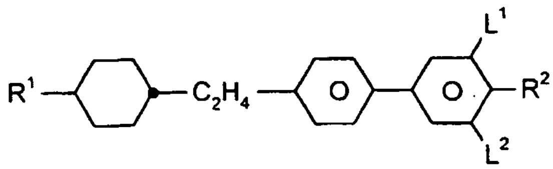

BECH

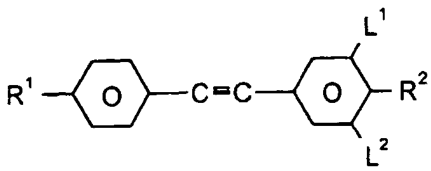

PTP

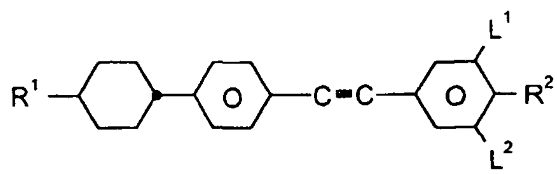

CPTP

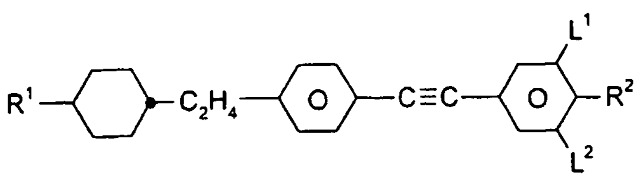

CEPTP

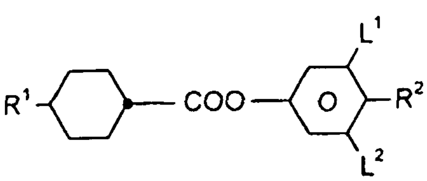

D

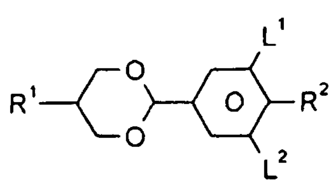

PDX

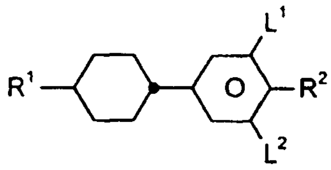

**PCH**

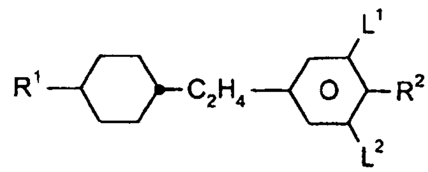

**EPCH**

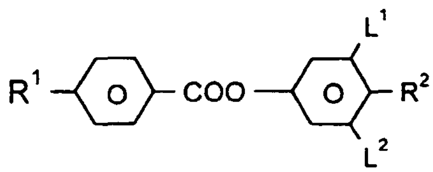

**ME**

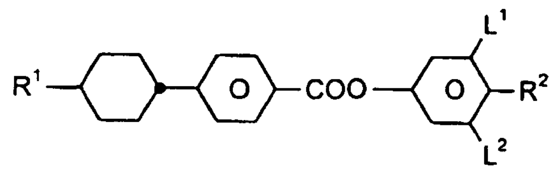

**HP**

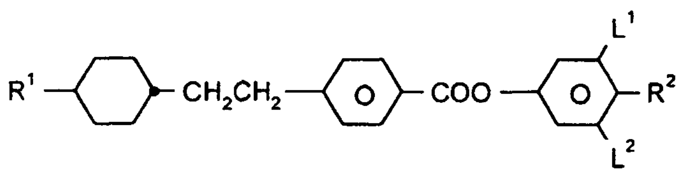

**EHP**

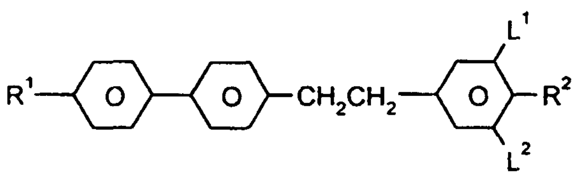

**ET**

**Table B:**

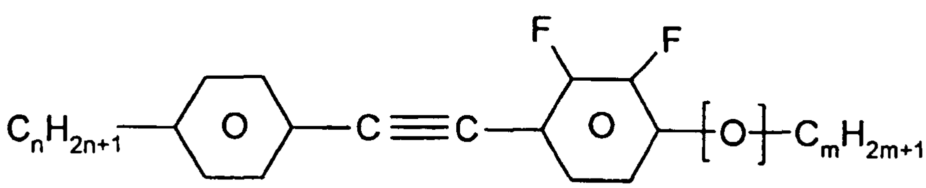

**PTP-n(O)mFF**

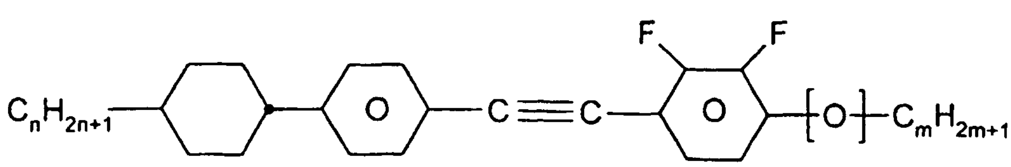

**CPTP-n(O)mFF**

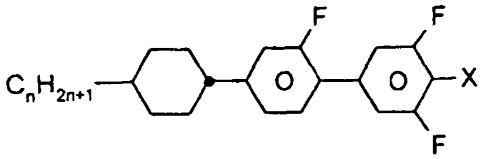

**CGU-n-X**

(X = F, Cl, OCF3)

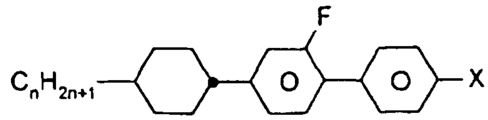

**BCH-n.FX**

(X = F, Cl, OCF3)

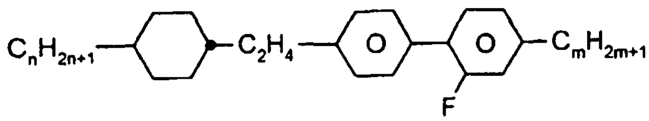

**Inm**

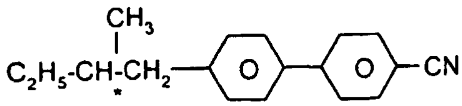

**CB15**

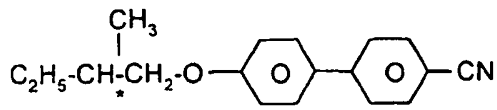

**C15**

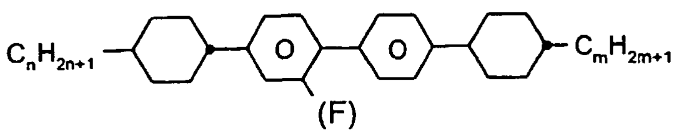

**CBC-nm(F)**

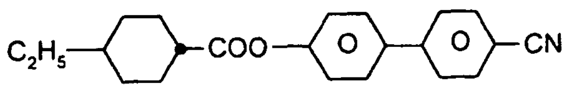

**CHE**

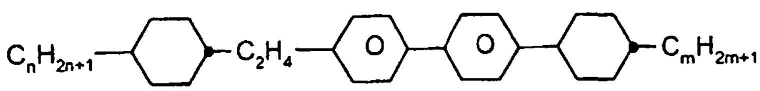

**ECBC-nm**

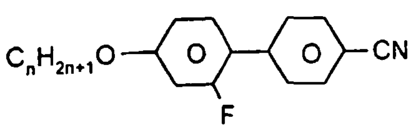

**B-nO.FN**

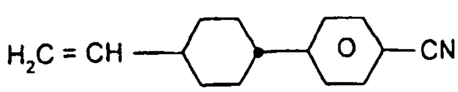

**CP-V-N**

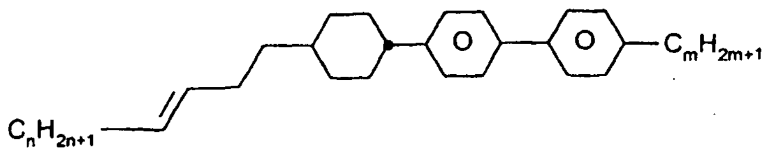

**CPP-nV2-m**

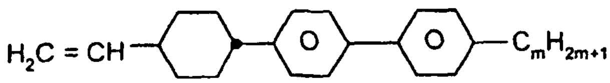

**CPP-V-m**

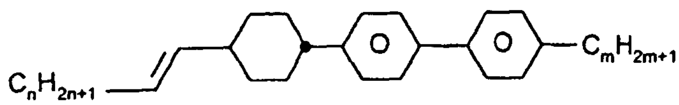

**CPP-nV-m**

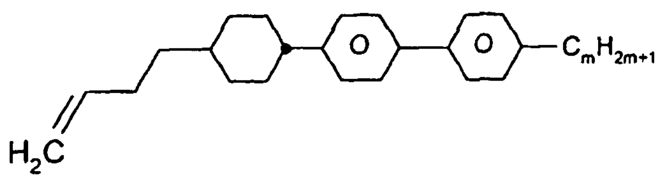

**CPP-V2-m**

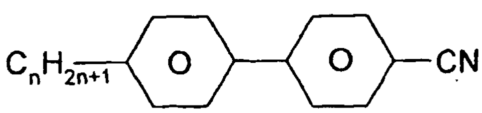

**K3·n**

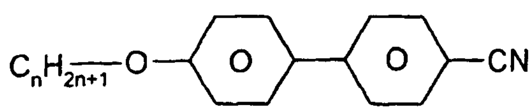

**M3·n**

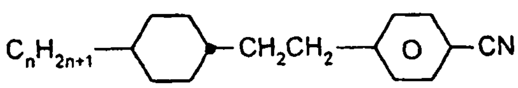

**G3·n**

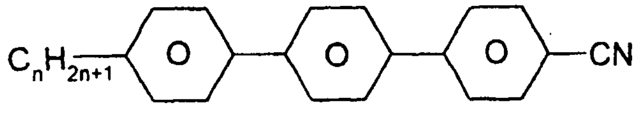

**T3·n**

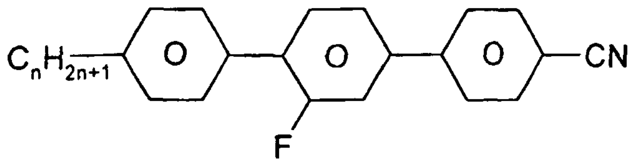

**PGIP-n-N**

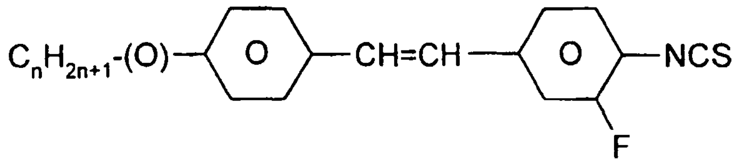

**PVG-n(O)-S**

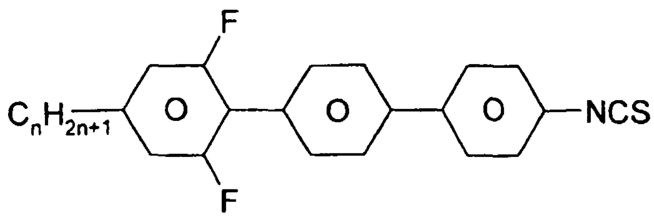

**UPP-n-S**

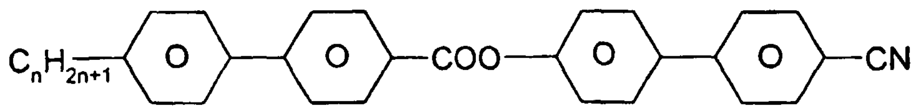

**BB3-n**

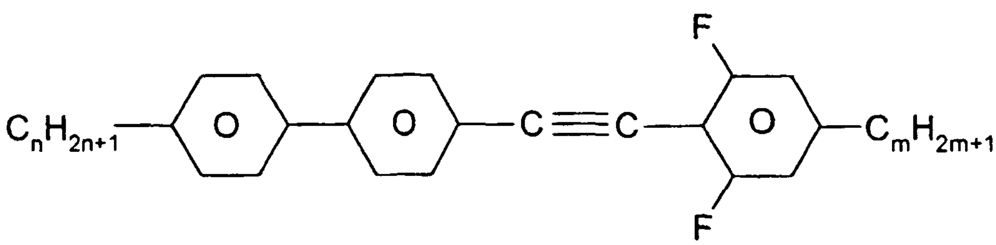

**PPTUI-n-m**

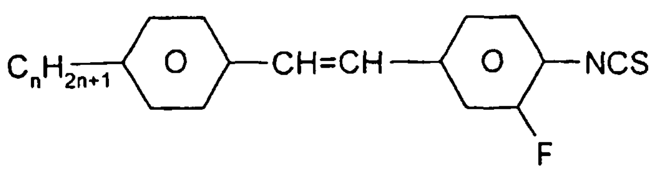

**PVG-n-S**

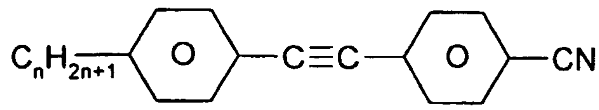

PTP-n-N

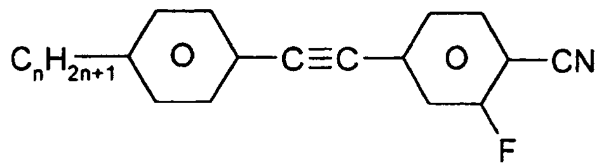

PTG-n-N

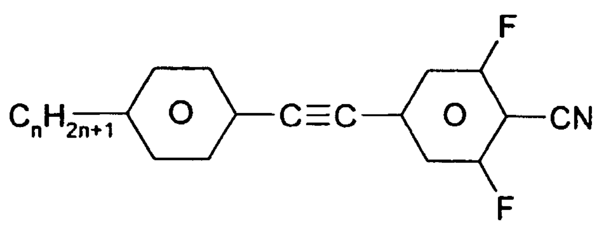

PTU-n-N

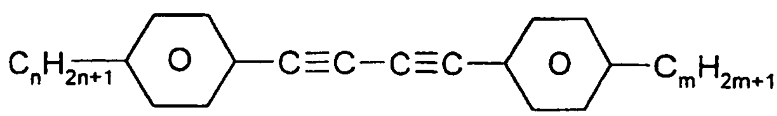

PTTP-n-m

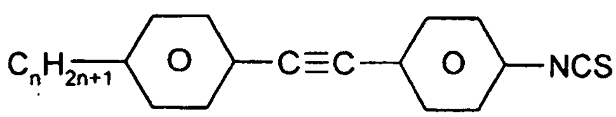

PTP-n-S

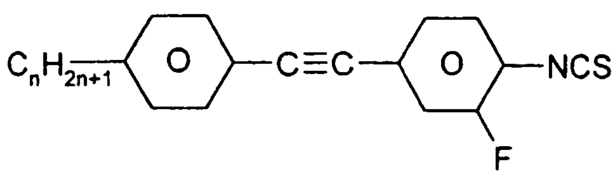

PTG-n-S

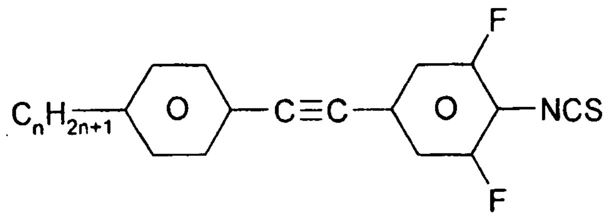

**PTU-n-S**

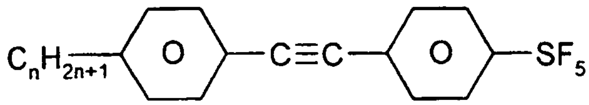

**PTP-n-SF5**

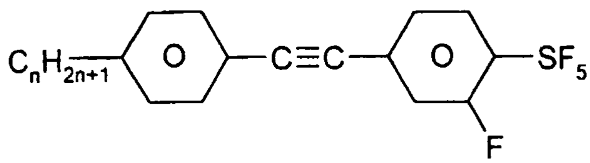

**PTG-n-SF5**

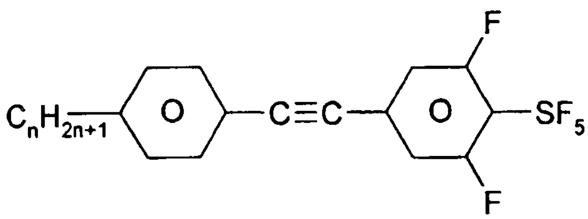

**PTU-n-SF5**

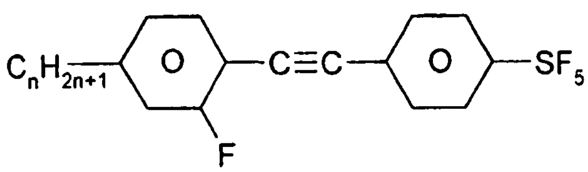

**GTP-n-SF5**

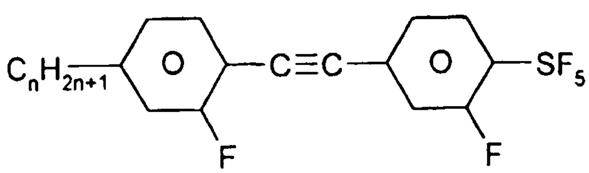

**GTG-n-SF5**

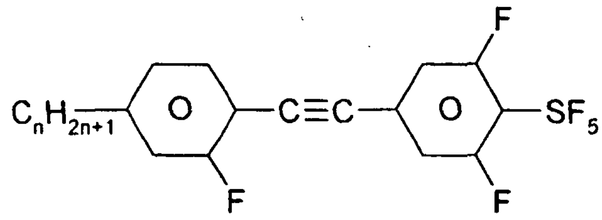

GTU-n-SF5

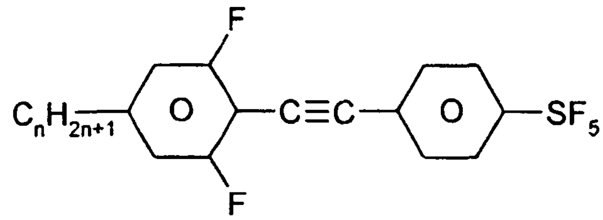

UTP-n-SF5

The liquid crystal media according to the instant invention do contain preferably

- four or more compounds selected from the group of compounds of tables A and B and/or
- five or more compounds selected from the group of compounds of table B and/or
- two or more compounds selected from the group of compounds of table A.

Examples

The examples given in the following are illustrating the present invention without limiting it in any way.
However, the phyiscal data especially of the compounds illustrate to the expert which properties can be achieved in which ranges. Especially the combination of the various properties which can be preferably achieved is thus well defined.

Example 1

A liquid crystal mixture is realized with the composition and properties given in the following table.

| Composition | | Physical Properties | |
|---|---|---|---|
| Compound Abbreviation | Conc. /% | T(N,I)<br>T(S,N) | = 83.0 °C<br>< 20 °C |
| PTP-5-SF5 | 10.0 | $n_e$ (20 °C, 589.3 nm) = | 1.8671 |
| PPTUI-5-2 | 15.0 | Δn (20 °C, 589.3 nm) = | 0.3323 |
| PPTUI-2-4 | 20.0 | ε∥ (20 °C, 1 kHz) | = 9.7 |
| PPTUI-5-4 | 25.0 | Δε (20 °C, 1 kHz) | = 6.4 |
| PTG-3-S | 10.0 | $k_1$ (20 °C) | = 11.6 pN |
| PTU-3-S | 10.0 | $k_3/k_1$ (20 °C) | = 1.14 |
| PTTP-0-0 | 10.0 | $V_o$ (20 °C) | = 1.43 V |
| Σ | 100.0 | | |

Example 2

A liquid crystal mixture is realized with the composition and properties given in the following table.

| Composition | | Physical Properties | |
|---|---|---|---|
| Compound<br>Abbreviation | Conc. /% | T(N,I)<br>T(S,N) | = 117.5 °C<br>< 20 °C |
| PTP-5-SF5 | 5.0 | $n_e$ (20 °C, 589.3 nm) | = 1.8619 |
| GTP-3-SF5 | 5.0 | Δn (20 °C, 589.3 nm) | = 0.3440 |
| PPTUI-3-4 | 20.0 | ε\|\| (20 °C, 1 kHz) | = 9.7 |
| PPTUI-4-4 | 50.0 | Δε (20 °C, 1 kHz) | = 6.5 |
| PTG-3-S | 8.0 | $k_1$ (20 °C) | = 16.1 pN |
| PTU-3-S | 7.0 | $k_3/k_1$ (20 °C) | = 1.10 |
| PTP-20F | 5.0 | $V_o$ (20 °C) | = 1.67 V |
| Σ | 100.0 | | |

## Claims

1. Liquid crystal medium, **characterized in that** it comprises a component A comprising one or more strongly dielectrically positive compounds with very high values of Δn of formula I

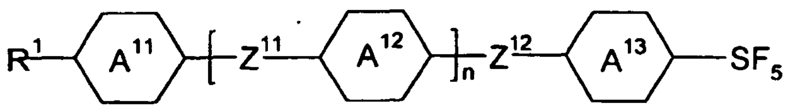

I

wherein

$R^1$ is n-alkyl, n-alkoxy with 1 to 7 C-atoms, alkenyl, alkenyloxy or alkoxyalkyl with 2 to 7 C-atoms,

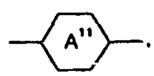

each, independently of each other, are

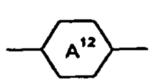 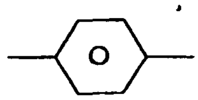, 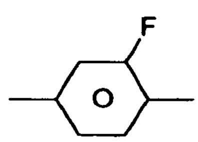, 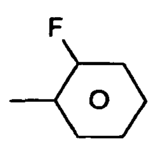, 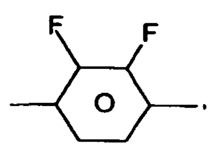,

and

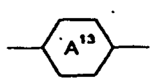 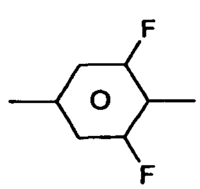 or 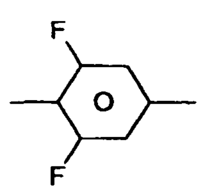

and

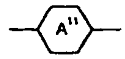

alternatively may also be

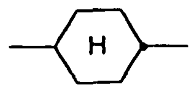 ,

one of

$Z^{11}$ and $Z^{12}$ is -C=C- and the other one, if present, is -C≡C-, $-CF_2O-$, trans- -CH=CH-, trans- -CF=CF- or a single bond, and

n is 0 or 1

and a component B comprising one or more compounds selected from the group of formulae II-1 to II-3

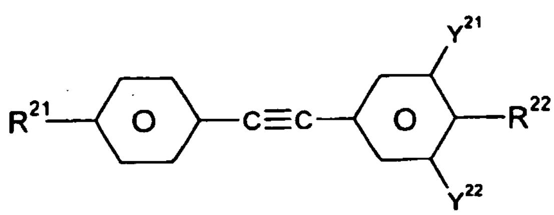

II-1

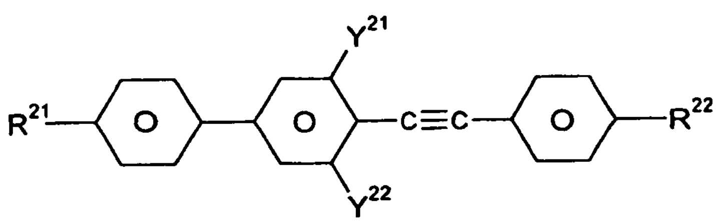

II-2

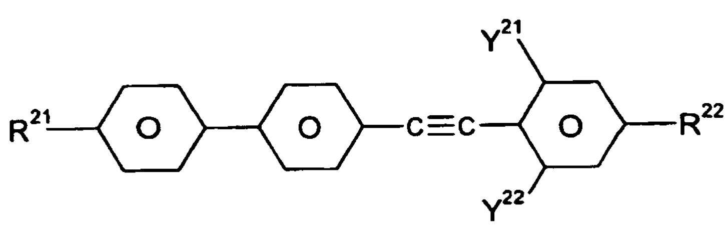

II-3

wherein

$R^{21}$ and $R^{22}$ independently of each other, have the meaning given for $R^1$,

$Y^{21}$ and $Y^{22}$ are, independently of each other, H or F,

and **in that** its Δn is 0.25 or more.

2. Liquid crystal medium according to claim 1, **characterized in that** it comprises a component C comprising one or compounds of formula III

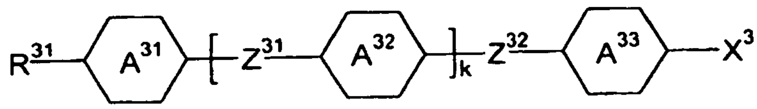

III

wherein

$R^{31}$ has the meaning given for $R^1$ in claim 1,

at least one of

$Z^{31}$ and $Z^{32}$ is -C≡C-, the other, if present, is $-CH_2CH_2-$, -COO-, -C≡C-, trans- -CH=CH-, trans- -CF=CF-, $-CH_2O-$, $-CF_2O-$ or a single bond,

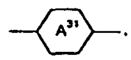

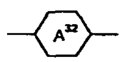

each have the meaning given for

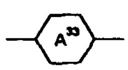

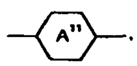

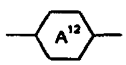

and

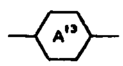

respectively, in claim 1,

k is 0 or 1 and

$X^3$ is CN, F, Cl or NCS.

3. Liquid crystal medium according to at least one of claims 1 and 2, **characterized in that** it comprises one or more compounds of formula IV

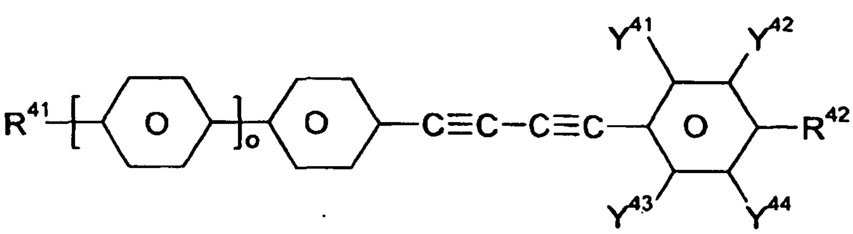

IV

wherein

$R^{41}$ and $R^{42}$ independently of one another, have the meaning given for $R^1$ in claim 1 and alternatively may be an H atom,

$Y^{41}$, $Y^{42}$, $Y^{43}$ and $Y^{44}$ are, independently of each other, H or F and

o is 0 or 1.

**4.** Liquid crystal medium according to at least one of claims 1 to 3, **characterized in that** it comprises one or more compounds selected from the group of formulae V to VIII

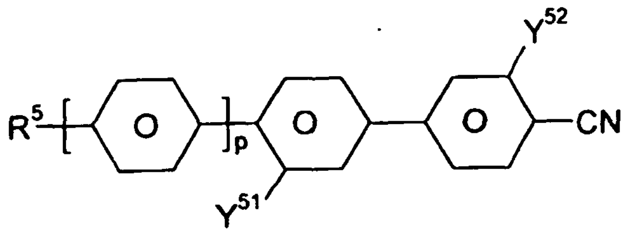

V

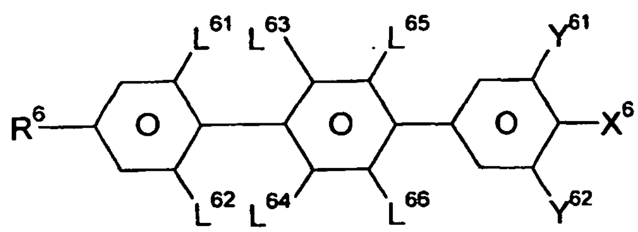

VI

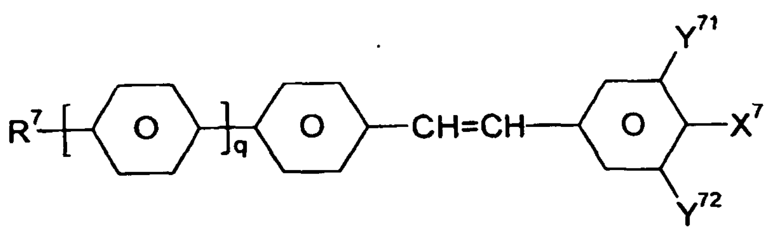

VII

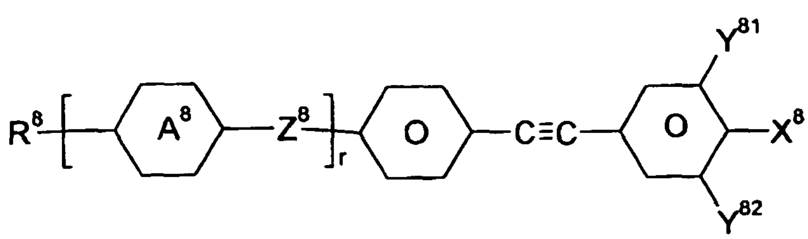

VIII

wherein

$R^5$, $R^6$, $R^7$ and $R^8$ independently of each other, have the meaning given for $R^1$ in claim 1,

$Y^{51}$ and $Y^{52}$ are, independently of each other, H or F,

p is 0 or 1,

$Y^{61}$ and $Y^{62}$ are, independently of each other, H or F,

$L^{61}$ to $L^{66}$ are, independently of each other, H or F,

$X^6$ is Cl or NCS,

$Y^{71}$ and $Y^{72}$ are, independently of each other, H or F,

$X^7$ is CN or NCS,

q is 0 or 1,

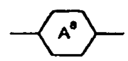

is

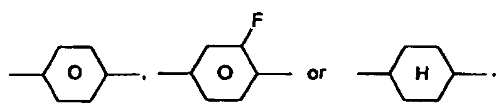

$Z^8$ is trans- -CH=CH-, trans- -CF=CF-, $-CH_2CH_2-$, $-CF_2CF_2-$, $-CF_2O-$, -COO- or a single bond,

$Y^{81}$ and $Y^{82}$ are, independently of each other, H or F,

$X^8$ is F, Cl, $-OCF_3$ or $-OCF_2H$ and

r is 0 or 1.

5. Liquid crystal medium according to claim 1, **characterized in that** the component A comprises one or more compounds selected from the group of formulae I-1 to I-5

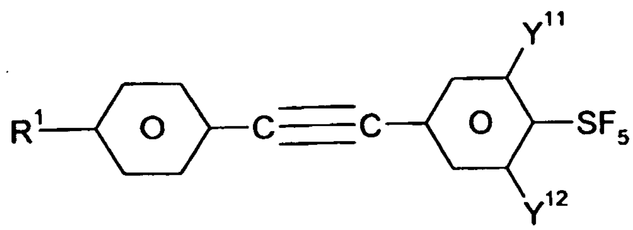

I-1

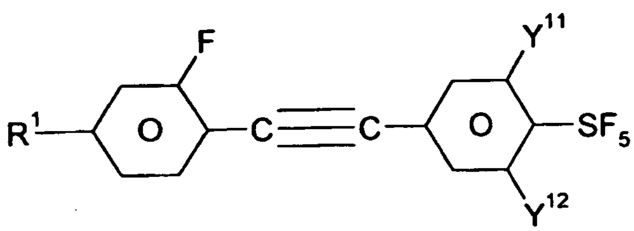

I-2

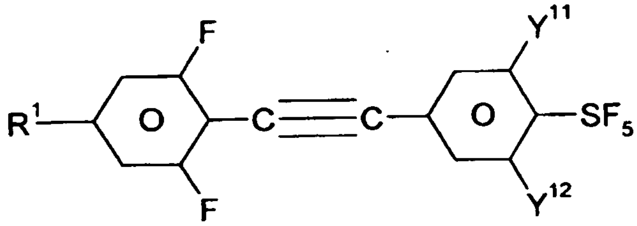

I-3

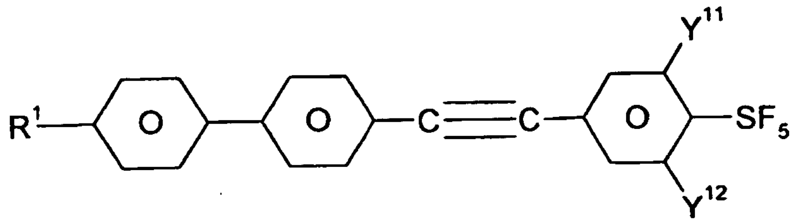

I-4

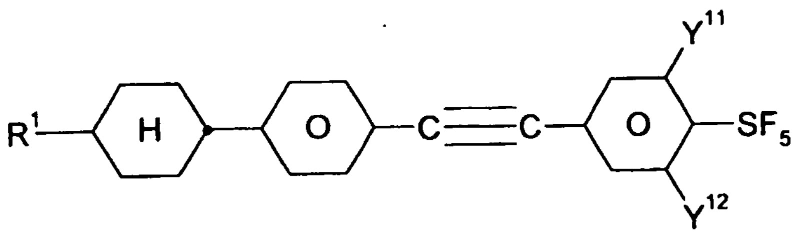

I-5

wherein

| | |
|---|---|
| $R^1$ | has the meaning given in claim 1 and |
| $Y^{11}$ and $Y^{12}$ | are, independently of each other, H or F. |

6. Liquid crystal display, **characterized in that** it comprises a liquid crystal medium according to at least one of claims 1 to 5.

7. Liquid crystal display according to claim 6, **characterized in that** it operates in the OCB mode.

8. Liquid crystal display according to claim 6, **characterized in that** it comprises the liquid crystal medium in a HPDLC composite system.

9. Use of a liquid crystal medium according to at least one of claims 1 to 5 in a liquid crystal display.

**Patentansprüche**

1. Flüssigkristallmedium, **dadurch gekennzeichnet, dass** es eine Komponente A enthaltend eine oder mehrere stark dielektrisch positive Verbindungen mit sehr hohen Δn-Werten der Formel I

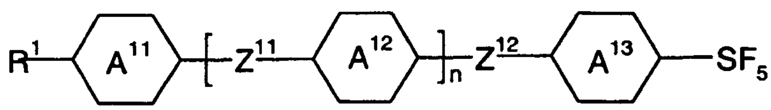 I

worin

$R^1$ n-Alkyl, n-Alkoxy mit 1 bis 7 C-Atomen, Alkenyl, Alkenyl- oxy oder Alkoxyalkyl mit 2 bis 7 C-Atomen bedeutet,

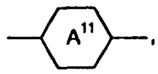,

jeweils unabhängig voneinander

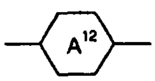 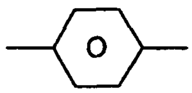, 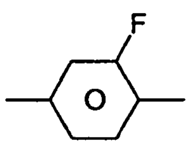, 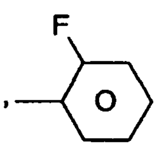, 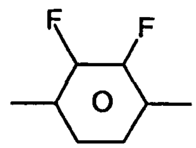,

und

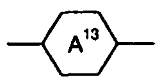 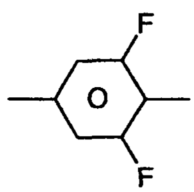 oder 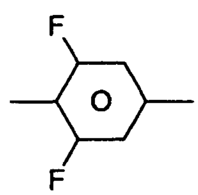

bedeuten und

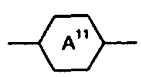

alternativ auch

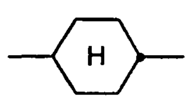

sein kann, eines von

$Z^{11}$ und $Z^{12}$ -C≡C- und das andere, wenn vorhanden, -C≡C-, $-CF_2O-$, trans- -CH=CH-, trans- -CF=CF- oder eine Ein- fachbindung bedeutet und

n 0 oder 1 bedeutet,

und eine Komponente B enthaltend eine oder mehrere Verbindungen ausgewählt aus der Gruppe der Formeln II-1 bis II-3

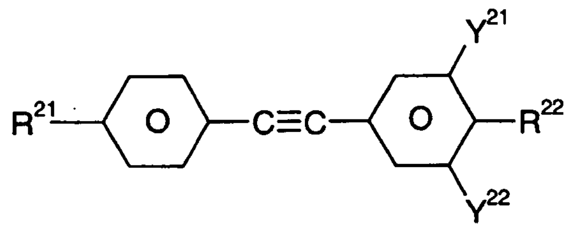

II-1

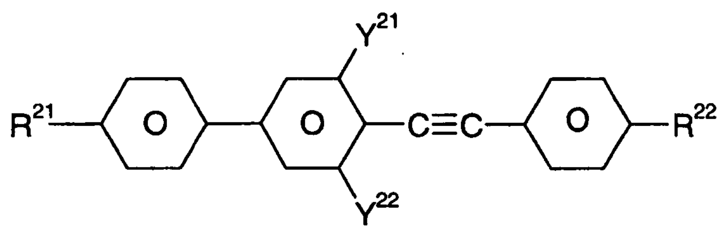

II-2

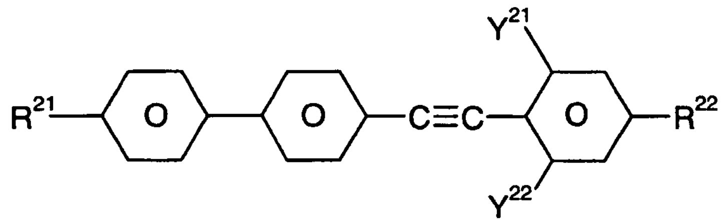

II-3

worin

$R^{21}$ und $R^{22}$ unabhängig voneinander die für $R^1$ angegebene Bedeu- tung besitzen,

$Y^{21}$ und $Y^{22}$ unabhängig voneinander H oder F bedeuten,

enthält und dass sein $\Delta n$ 0,25 oder mehr beträgt.

**2.** Flüssigkristallmedium nach Anspruch 1, **dadurch gekennzeichnet, dass** es eine Komponente C enthaltend eine oder mehrere Verbindungen der Formel III

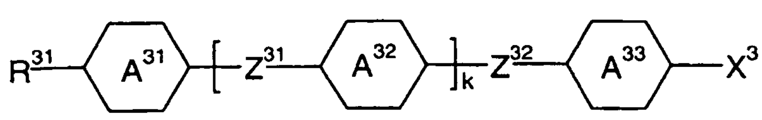

III

enthält, worin

$R^{31}$ die für $R^1$ in Anspruch 1 angegebene Bedeutung besitzt,

mindestens eines von

$Z^{31}$ und $Z^{32}$ -C≡C- bedeutet, das andere, wenn vorhanden, für $-CH_2CH_2-$, -COO-, -C≡C-, trans- -CH=CH-, trans- -CF=CF-, $-CH_2O-$, $-CF_2O-$ oder eine Einfachbindung steht,

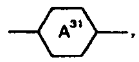

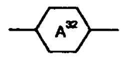

jeweils die für

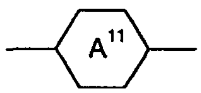,
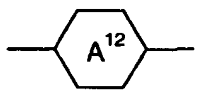 bzw. 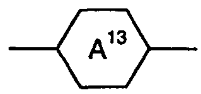

und

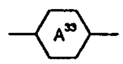

in Anspruch 1 angegebene Bedeutung besitzen,

k 0 oder 1 bedeutet und

$X^3$ CN, F, Cl oder NCS bedeutet.

**3.** Flüssigkristallmedium nach mindestens einem der Ansprüche 1 und 2, **dadurch gekennzeichnet, dass** es eine oder mehrere Verbindungen der Formel IV

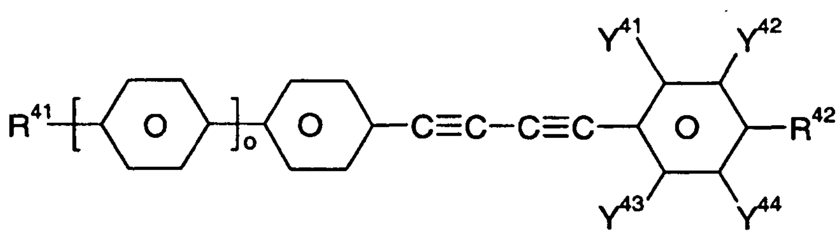 IV

enthält, worin

$R^{41}$ und $R^{42}$ unabhängig voneinander die für $R^1$ in Anspruch 1 ange- gebene Bedeutung besitzen und alternativ ein H-Atom bedeuten können,

$Y^{41}$, $Y^{42}$, $Y^{43}$ und $Y^{44}$ unabhängig voneinander H oder F bedeuten und

o 0 oder 1 bedeutet.

**4.** Flüssigkristallmedium nach mindestens einem der Ansprüche 1 bis 3, **dadurch gekennzeichnet, dass** es eine oder mehrere Verbindungen ausgewählt aus der Gruppe der Formeln V bis VIII

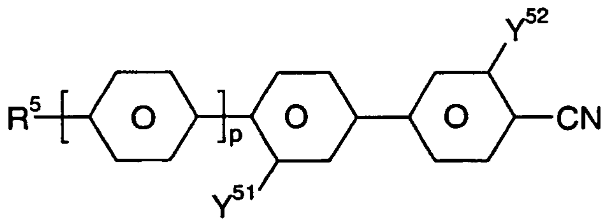

V

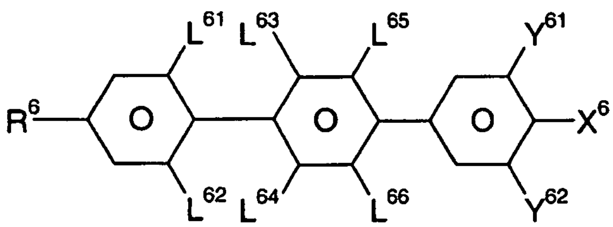

VI

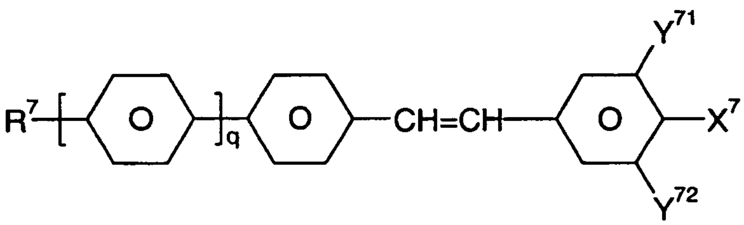

VII

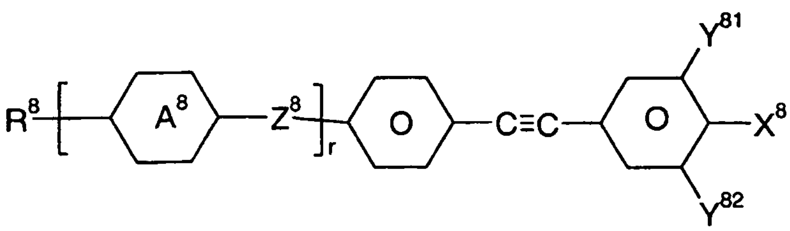

VIII

enthält, worin

| | |
|---|---|
| $R^5$, $R^6$, $R^7$ und $R^8$ | unabhängig voneinander die Bedeutung für $R^1$ in Anspruch 1 angegebene Bedeutung besitzen, |
| $Y^{51}$ und $Y^{52}$ | unabhängig voneinander H oder F bedeuten, |
| p | 0 oder 1 bedeutet, |
| $Y^{61}$ und $Y^{62}$ | unabhängig voneinander H oder F bedeuten, |
| $L^{61}$ bis $L^{66}$ | unabhängig voneinander H oder F bedeuten, |
| $X^6$ | Cl oder NCS bedeutet, |
| $Y^{71}$ und $Y^{72}$ | unabhängig voneinander H oder F bedeuten, |
| $X^7$ | CN oder NCS bedeutet, |

q 0 oder 1 bedeutet,

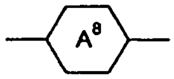

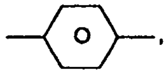, 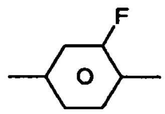 oder 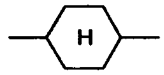

bedeutet,

$Z^8$ trans- -CH=CH-, trans- -CF=CF-, $-CH_2CH_2-$, $-CF_2CF_2-$, $-CF_2O-$, -COO- oder eine Einfach- bindung bedeutet,

$Y^{81}$ und $Y^{82}$ unabhängig voneinander H oder F bedeuten,

$X^8$ F, Cl, $-OCF_3$ oder $-OCF_2H$ bedeutet und

r 0 oder 1 bedeutet.

5. Flüssigkristallmedium nach Anspruch 1, **dadurch gekennzeichnet, dass** die Komponente A eine oder mehrere Verbindungen ausgewählt aus der Gruppe der Formeln I-1 bis I-5

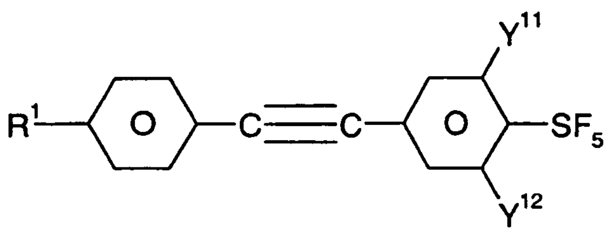

I-1

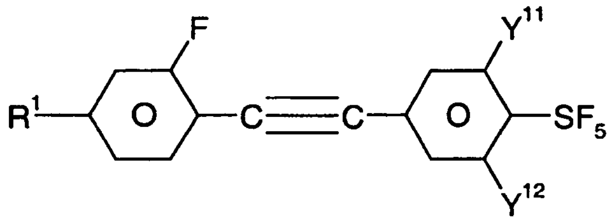

I-2

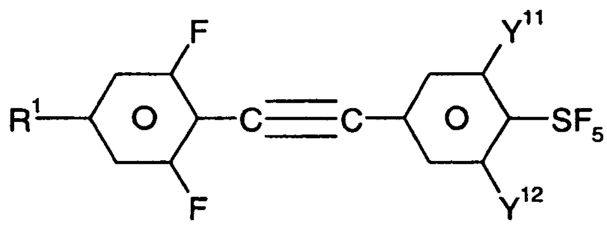

I-3

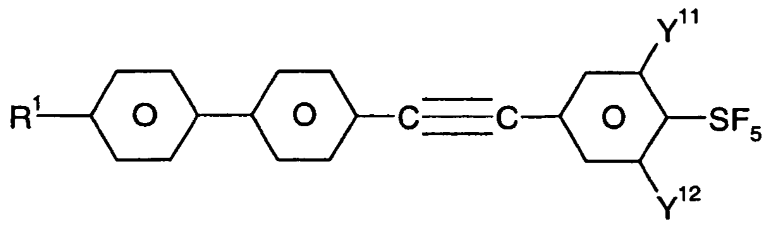

I-4

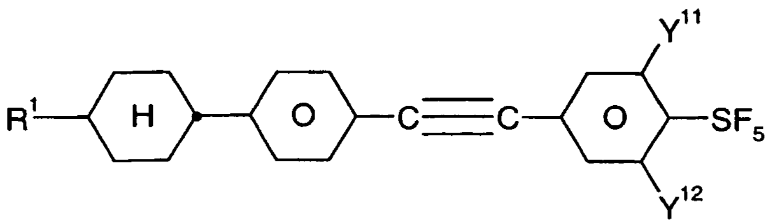

I-5

enthält, worin

$R^1$ die in Anspruch 1 angegebene Bedeutung besitzt und

$Y^{11}$ und $Y^{12}$ unabhängig voneinander H oder F bedeuten.

6. Flüssigkristallanzeige, **dadurch gekennzeichnet, dass** sie ein Flüssigkristallmedium nach mindestens einem der Ansprüche 1 bis 5 enthält.

7. Flüssigkristallanzeige nach Anspruch 6, **dadurch gekennzeichnet, dass** sie im OCB-Modus arbeitet.

8. Flüssigkristallanzeige nach Anspruch 6, **dadurch gekennzeichnet, dass** sie das Flüssigkristallmedium in einem HPDLC-Verbundsystem enthält.

9. Verwendung eines Flüssigkristallmediums nach mindestens einem der Ansprüche 1 bis 5 in einer Flüssigkristallanzeige.

**Revendications**

1. Milieu de cristal liquide, **caractérisé en ce qu'**il comprend un composant A qui comprend un ou plusieurs composés fortement diélectriquement positifs avec des valeurs très élevées de $\Delta n$ de la formule I

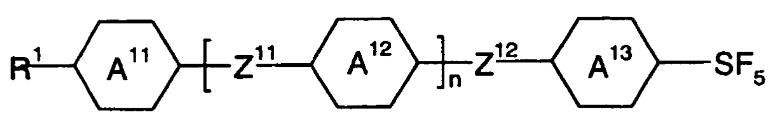

I

dans laquelle

$R^1$ est n-alkyle, n-alkoxy avec de 1 à 7 atomes de C, alké- nyle, alkényloxy ou alkoxyalkyle avec de 2 à 7 atomes de C,

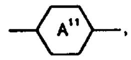,

sont, chacun indépendamment l'un de l'autre et

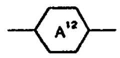

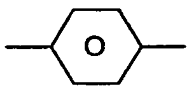, 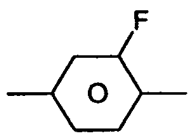, 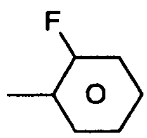, 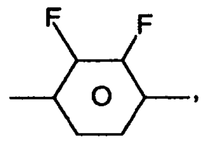,

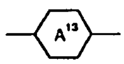 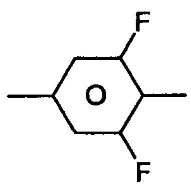 ou 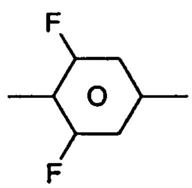

et

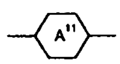

à titre d'alternative peut également être

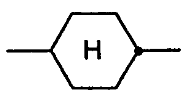 ,

l'un de $Z^{11}$ et $Z^{12}$ est -C=C- et l'autre, s'il est présent, est -C≡C-, $-CF_2O-$, trans- -CH=CH-, trans- -CF=CF- ou une liaison simple, et n est 0 ou 1 et un composant B qui comprend un ou plusieurs composés choisis parmi le groupe des formules II-1 à II-3

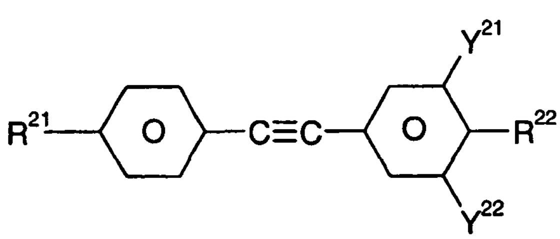

II-1

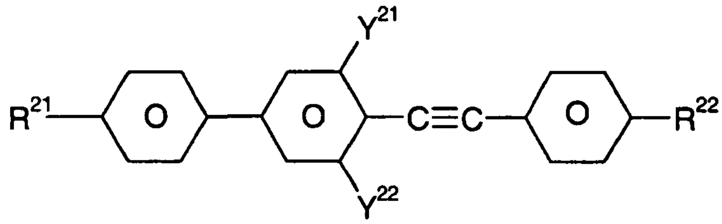

II-2

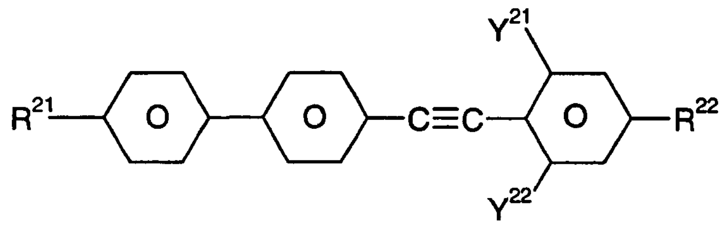

II-3

dans lesquelles

$R^{21}$ et $R^{22}$ présentent, indépendamment l'un de l'autre, la signification donnée pour $R^1$,

$Y^{21}$ et $Y^{22}$ sont, indépendamment l'un de l'autre, H ou F,

et **en ce que** son Δn est de 0,25 ou plus.

**2.** Milieu de cristal liquide selon la revendication 1, **caractérisé en ce qu'**il comprend un composant C qui comprend un ou plusieurs composés de la formule III

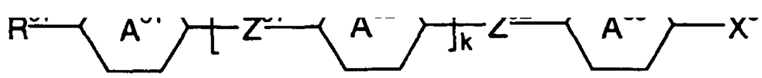

III

dans laquelle

dans laquelle

$R^{31}$ présente la signification donnée pour $R^1$ selon la revendication 1,

au moins l'un de

$Z^{31}$ et $Z^{32}$ est -C≡C-, l'autre, si il est présent, est $-CH_2CH_2-$, -COO-, -C≡C-, trans- -CH=CH-, trans- -CF=CF-, $-CH_2O-$, $-CF_2O-$ ou une liaison simple,

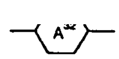

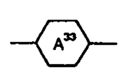

présentent chacun la signification donnée pour et

de façon respective, selon la revendication 1,

k est 0 ou 1 et

$X^3$ est CN, F, Cl ou NCS.

**3.** Milieu de cristal liquide selon au moins l'une des revendications 1 et 2, **caractérisé en ce qu'**il comprend un ou plusieurs composés de la formule IV

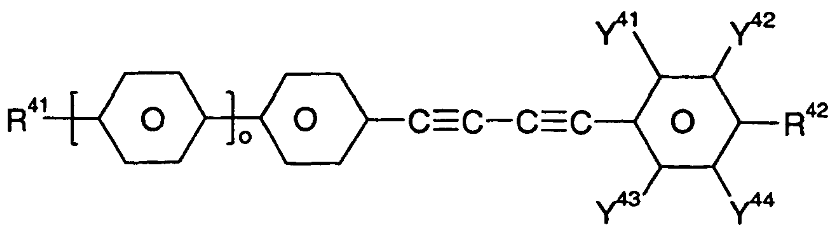

IV

dans laquelle

$R^{41}$ et $R^{42}$ présentent, indépendamment l'un de l'autre, la signifi- cation donnée pour $R^1$ selon la revendication 1 et à titre d'alternative, peuvent être un atome de H,

$Y^{41}$, $Y^{42}$, $Y^{43}$ et $Y^{44}$ sont, indépendamment les uns des autres, H ou F et

o est 0 ou 1.

**4.** Milieu de cristal liquide selon au moins l'une des revendications 1 à 3, **caractérisé en ce qu'**il comprend un ou plusieurs composés choisis parmi le groupe des formules V à VIII

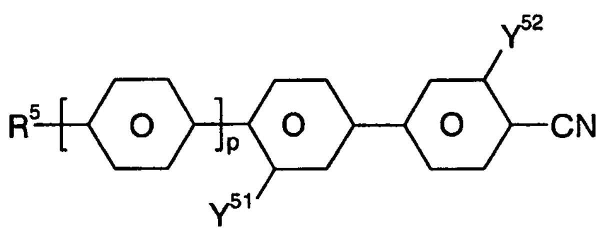

V

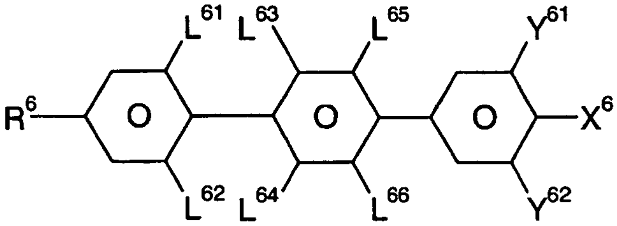

VI

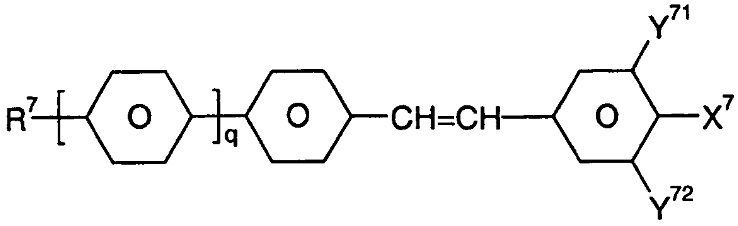

VII

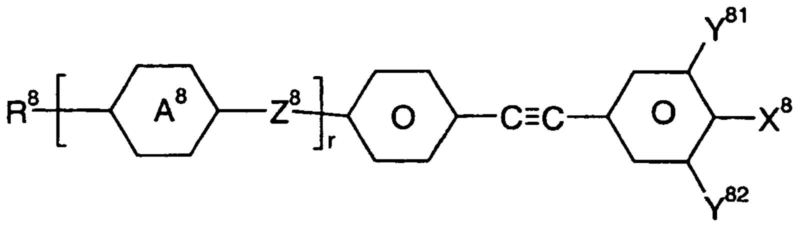

VIII

dans lesquelles

| | |
|---|---|
| $R^5$, $R^6$, $R^7$ et $R^8$ | présentent, indépendamment les uns des autres, la signification donnée pour $R^1$ selon la revendica- tion 1, |
| $Y^{51}$ et $Y^{52}$ | sont, indépendamment l'un de l'autre, H ou F, |
| p | est 0 ou 1, |
| $Y^{61}$ et $Y^{62}$ | sont, indépendamment l'un de l'autre, H ou F, |
| $L^{61}$ à $L^{66}$ | sont, indépendamment les uns des autres, H ou F, |
| $X^6$ | est Cl ou NCS, |
| $Y^{71}$ et $Y^{72}$ | sont, indépendamment l'un de l'autre, H ou F, |
| $X^7$ | est CN ou NCS, |
| q | est 0 ou 1, |

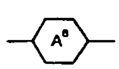

est

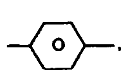 , 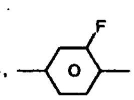 ou 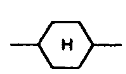 ,

$Z^8$ est trans- -CH=CH-, trans- -CF=CF-, $-CH_2CH_2-$, $-CF_2CF_2-$, $-CF_2O-$, -COO- ou une liaison simple,

$Y^{81}$ et $Y^{82}$ sont, indépendamment l'un de l'autre, H ou F,

$X^8$ est F, Cl, $-OCF_3$ ou $-OCF_2H$ et

r est 0 ou 1.

**5.** Milieu de cristal liquide selon la revendication 1, **caractérisé en ce que** le composant A comprend un ou plusieurs composés choisis parmi le groupe des formules I-1 à I-5

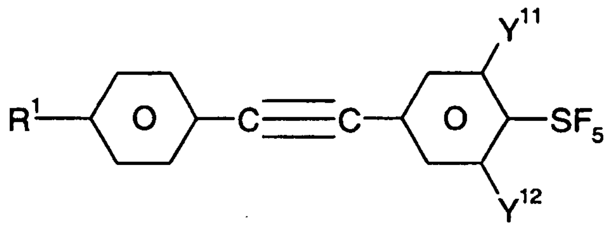

I-1

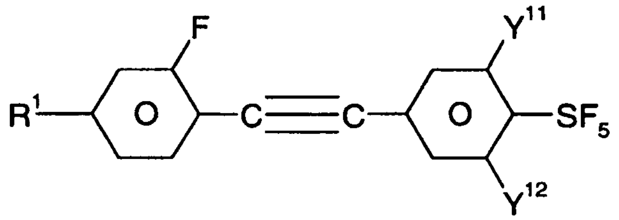

I-2

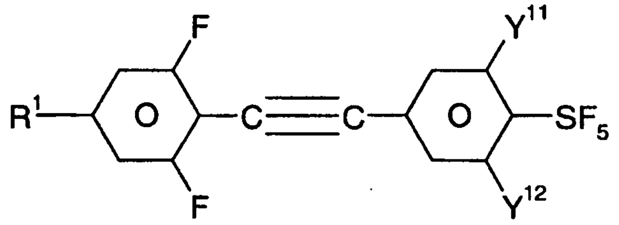

I-3

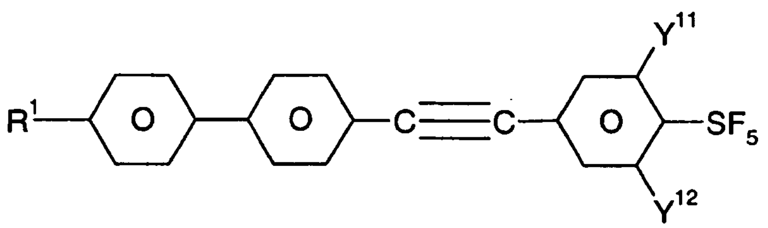

I-4

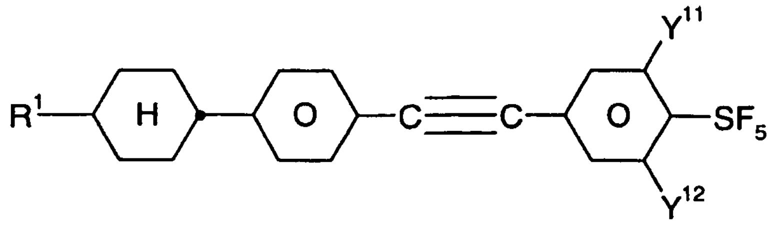

I-5

dans lesquelles

$R^1$ présente la signification donnée selon la revendication 1 et

$Y^{11}$ et $Y^{12}$ sont, indépendamment l'un de l'autre, H ou F.

**6.** Affichage à cristaux liquides **caractérisé en ce qu'**il comprend un milieu de cristal liquide selon au moins l'une des revendications 1 à 5.

**7.** Affichage à cristaux liquides selon la revendication 6, **caractérisé en ce qu'**il fonctionne dans le mode OCB.

**8.** Affichage à cristaux liquides selon la revendication 6, **caractérisé en ce qu'**il comprend le milieu de cristal liquide selon un système composite HPDLC.

**9.** Utilisation d'un milieu de cristal liquide selon au moins l'une des revendications 1 à 5 dans un affichage à cristaux liquides.